# EUROPEAN PATENT APPLICATION

(11) **EP 4 598 000 A1**
(43) Date of publication of application: **06.08.2025**
(21) Application number: 23877726.2
(22) Date of filing: 12.10.2023
(51) Int. Cl.: H04M 1/72454, H01Q 1/24, H04M 1/02, H01Q 1/38, H01Q 1/46, H04B 1/40

(54) **ANTENNA USING CONDUCTIVE PORTIONS AND ELECTRONIC DEVICE INCLUDING SAME**

(30) Priority: 12.10.2022 KR 20220131005; 28.11.2022 KR 20220162066
(71) Applicant: Samsung Electronics Co., Ltd., Suwon-si, Gyeonggi-do 16677 (KR)
(72) Inventor: NAM, Hojung, Suwon-si Gyeonggi-do 16677 (KR); YOON, Shinho, Suwon-si Gyeonggi-do 16677 (KR); YUN, Himchan, Suwon-si Gyeonggi-do 16677 (KR); BANG, Museok, Suwon-si Gyeonggi-do 16677 (KR); HWANG, Soonho, Suwon-si Gyeonggi-do 16677 (KR)
(74) Representative: HGF
(86) International application number: PCT/KR2023/015773
(87) International publication number: WO 2024/080803

(57) **Abstract**

This electronic device may include: at least one grip sensor; at least one processor; a first housing; a second housing coupled to the first housing so as to be movable along a first direction in which the first housing is withdrawn or a second direction opposite to the first direction; and a first conductive portion, a second conductive portion, and a third conductive portion, which are disposed on one surface, oriented in the second direction, of the second housing.

## Description

### [Technical Field]

Various embodiments of the present invention relate to an antenna using conductive portions and an electronic device including the same.

### [Background Art]

In order to enable a user to receive various contents through an electronic device despite the miniaturization of electronic devices, an electronic device is being developed in which a size of a display region of a display for displaying contents may be changed. The electronic device may include a plurality of antennas to receive various contents.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

In various embodiments, an electronic device is provided. The electronic device may comprise at least one grip sensor, at least one processor, a first housing, a second housing coupled to the first housing so as to be movable along a first direction in which the first housing is drawn out or along a second direction opposite to the first direction, and a first conductive portion, a second conductive portion, and a third conductive portion disposed on a side of the second housing facing the second direction. The first conductive portion may be disposed in a first side region of the side, the third conductive portion may be disposed in a second side region opposite the first side region, and the second conductive portion may be disposed between the first conductive portion and the third conductive portion. A first segmentation portion may be formed between the first conductive portion and the second conductive portion, and a second segmentation portion may be formed between the third conductive portion and the second conductive portion. The at least one processor may be configured to detect a grip of the electronic device through the at least one grip sensor. The at least one processor may be configured to, based on identifying that the grip is associated with the first side region of the electronic device, communicate with an external electronic device through the third conductive portion and the second conductive portion.

In various embodiments, an electronic device is provided. The electronic device may comprise at least one grip sensor, at least one processor, a first housing, a second housing coupled to the first housing so as to be movable along a first direction in which the first housing is drawn out or along a second direction opposite to the first direction, and a first conductive portion, a second conductive portion, and a third conductive portion disposed on a side of the first housing facing the first direction. The second conductive portion may be disposed between the first conductive portion and the third conductive portion. A first segmentation portion may be formed between the first conductive portion and the second conductive portion, and a second segmentation portion may be formed between the third conductive portion and the second conductive portion. The at least one processor may be configured to detect a grip of the electronic device through the at least one grip sensor. The at least one processor may be configured to, based on identifying that the grip is associated with the first side region of the electronic device, communicate with an external electronic device through the third conductive portion and the second conductive portion.

### [Description of the Drawings]

FIG. 1 is a block diagram of an electronic device in a network environment.
FIG. 2A, FIG. 2B, FIG. 2C, and FIG. 2D illustrate states of an electronic device including a movable housing, according to embodiments.
FIG. 3 illustrates another example of an electronic device including a movable housing, according to embodiments.
FIG. 4A illustrates an example of feed switching using a plurality of conductive portions of a frame, according to embodiments.
FIG. 4B illustrates an example of a circuit for a plurality of conductive portions of a frame, according to embodiments.
FIG. 5A illustrates an example of feeding, according to an embodiment.
FIG. 5B illustrates an example of feed switching, according to an embodiment.
FIG. 5C illustrates an example of grounding, according to an embodiment.
FIG. 6 illustrates examples of a grip sensor, according to an embodiment.
FIG. 7 illustrates an example of capacitance sensing, according to an embodiment.
FIG. 8A illustrates an example of band switching, according to an embodiment.
FIG. 8B illustrates an example of performance in a beside hand (BH) environment of feed switching, according to an embodiment.
FIG. 8C illustrates an example of performance in a beside head and hand (BHH) environment of feed switching, according to an embodiment.
FIG. 9 illustrates examples of a tuning circuit and a switching circuit according to an embodiment.
FIGS. 10A to 10B illustrate examples of a plurality of conductive portions of a frame, according to embodiments.
FIG. 11A illustrates an example of antenna performance in a BH environment according to an embodiment.
FIG. 11B illustrates an example of antenna performance in a BHH environment according to an embodiment.
FIG. 12 illustrates an example of performance of an antenna using a plurality of conductive portions in an upper frame of an electronic device according to an embodiment.
FIG. 13 illustrates examples of a radiation pattern of feed switching according to an embodiment.
FIGS. 14A, 14B, and 14C illustrate examples of specific absorption rate (SAR) performance in a BHH environment.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to parts of an electronic device (e.g., substrate, printed circuit board (PCB), flexible PCB (FPCB), module, antenna, antenna element, circuit, processor, chip, component, device), terms referring to a shape of parts (e.g., structure, structure object, support portion, contact portion, protrusion), terms referring to a connect portion between structures (e.g., connect portion, contact portion, support portion, contact structure, conductive portion, assembly), terms referring to circuit (e.g., PCB, FPCB, signal line, ground line, feeding line, data line, RF signal line, antenna line, RF path, RF module, RF circuit, splitter, divider, coupler, combiner) and the like,used in the following description are exemplified for convenience of explanation. Therefore, the present disclosure is not limited to terms to be described below, and another term having an equivalent technical meaning may be used. In addition, a term such as '...unit, '...device, '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Hereinafter, the present disclosure relates to a reconfigurable antenna and an electronic device including the reconfigurable antenna. Specifically, the present disclosure describes a technique for utilizing conductive portions of a frame at the top or bottom of an electronic device as an antenna. The conductive portions of the frame are divided by segmentation portions of the frame. A difference in electrical characteristics between the left and right sides may be maximized by controlling a delimiter frame positioned at a center of the conductive portions.

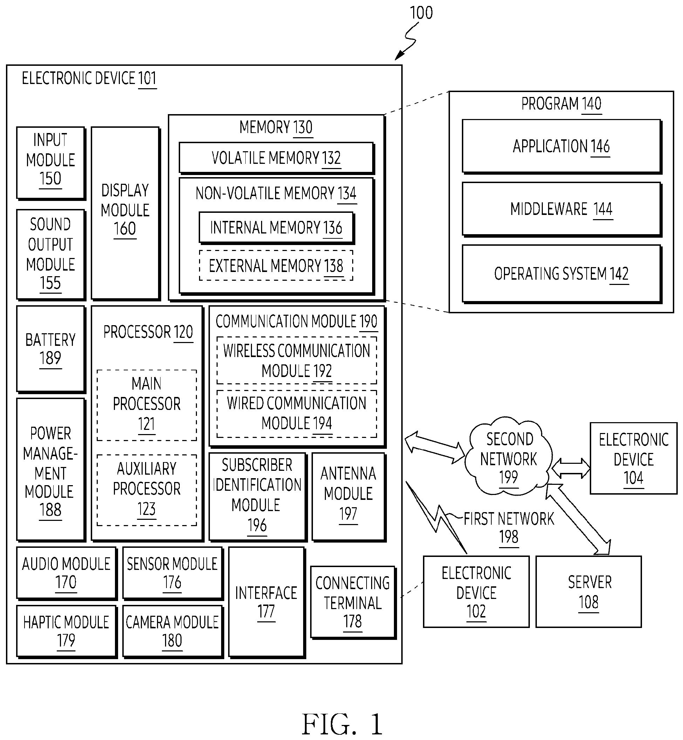

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

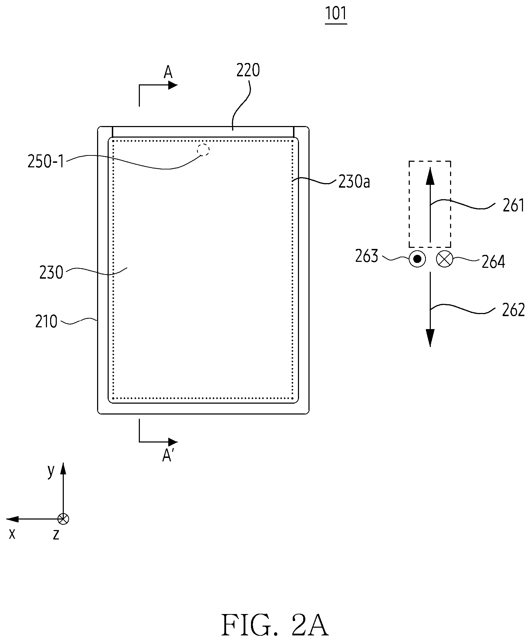

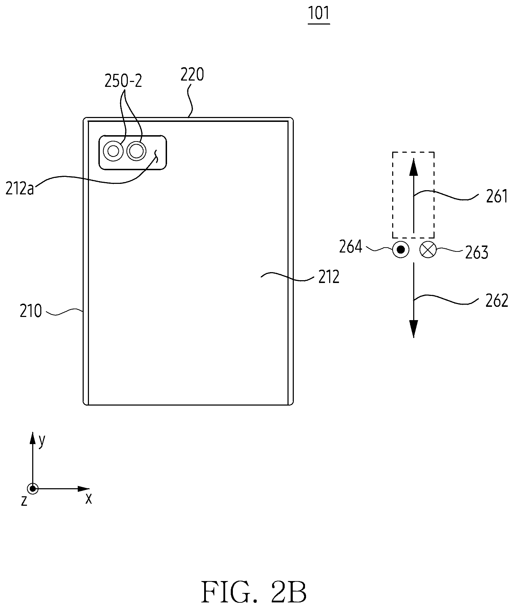

For example, a display of the display module 160 may be flexible. For example, the display may include a display region exposed outside a housing of the electronic device 101 that provides at least a portion of an outer surface of the electronic device 101. For example, since the display has flexibility, at least a portion of the display may be rollable into the housing or slidable into the housing. For example, a size of the display region may be changed according to a size of at least a portion of the display rolled into the housing or slid into the housing. For example, the electronic device 101 including the display may be in a plurality of states including a first state providing the display region having a first size and a second state providing the display region having a second size different from the first size. For example, the first state may be illustrated through the description of FIGS. 2A and 2B.

FIGS. 2A to 2D illustrate states of the electronic device 101 including a movable housing according to embodiments. The states of the electronic device 101 may include the first state. The electronic device may include the second state. The states of the electronic device 101 may include a state different from the first state and the second state.

FIG. 2A is a top plan view of an exemplary electronic device 101 in a first state.

Referring to FIG. 2A, the electronic devices 101 may include a first housing 210, a second housing 220 movable with respect to the first housing 210 in a first direction 261 parallel to the y-axis or a second direction 262 parallel to the y-axis and opposite to the first direction 261, and a display 230 (e.g., the display).

For example, the electronic device 101 may be in the first state. For example, in the first state, the second housing 220 may be movable with respect to the first housing 210 in the first direction 261 among the first direction 261 and the second direction 262. For example, in the first state, the second housing 220 may not be movable in the second direction 262 with respect to the first housing 210.

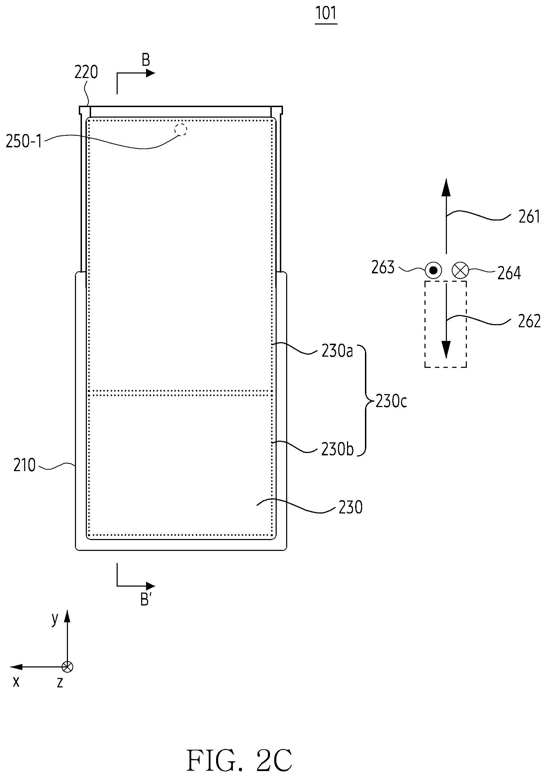

For example, in the first state, the display 230 may provide the display region having a smallest size. For example, in the first state, the display region may correspond to a region 230a. Although not illustrated in FIG. 2A, in the first state, a region (e.g., the region 230b of FIG. 2C) of the display 230, which is different from the region 230a that is the display region, may be included in the first housing 210. In the first state, the region may be covered by the first housing 210. For example, in the first state, the region may be rolled into the first housing 210. For example, in the first state, the region 230a may include a planar portion, unlike the region including a curved portion. However, it is not limited thereto. For example, the region 230a may include a curved portion extending from the planar portion and positioned within an edge portion in the first state.

For example, the first state may be referred to as a slide-in state or a closed state in terms of at least a portion of the second housing 220 being positioned within the first housing 210. For example, the first state may be referred to as a reduced state in terms of providing the display region having the smallest size. However, it is not limited thereto.

For example, the first housing 210 may include a first image sensor 250-1 in the camera module 180, visually exposed through a portion of the region 230a and facing a third direction 263 parallel to the z-axis. For example, the camera module 180 may be disposed to perform its function without being visually exposed through a portion of the region 230a in an internal space of the electronic device. For example, although not illustrated in FIG. 2A, the second housing 220 may include one or more second image sensors in the camera module 180, exposed through a portion of the second housing 220 and facing in a fourth direction 264 parallel to the z-axis and opposite to the third direction 263. For example, the one or more second image sensors may be illustrated through the description of FIG. 2B.

FIG. 2B is a rear view of an exemplary electronic device in a first state.

Referring to FIG. 2B, in the first state, one or more second image sensors 250-2 disposed in the second housing 220 may be positioned in a structure disposed in the first housing 210 for the one or more second image sensors 250-2. For example, light from the outside of the electronic device 101 may be received by the one or more second image sensors 250-2 through the structure, in the first state. For example, since the one or more second image sensors 250-2 are positioned in the structure in the first state, the one or more second image sensors 250-2 may be exposed through the structure in the first state. For example, the structure may be implemented in various ways. For example, the structure may be an opening or a notch. For example, the structure may be an opening 212a in a plate 212 of the first housing 210 surrounding at least a portion of the second housing 220. However, it is not limited thereto. For example, in the first state, the one or more second image sensors 250-2 included in the second housing 220 may be covered by the plate 212 of the first housing 210.

Referring back to FIG. 2A, the first state may be changed to the second state.

For example, the first state (or the second state) may be changed to the second state (or the first state) through one or more intermediate states between the first state and the second state.

For example, the first state (or the second state) may be changed to the second state (or the first state) based on a set user input. For example, the first state (or the second state) may be changed to the second state (or the first state), in response to a user input to a physical button exposed through a portion of the first housing 210 or a portion of the second housing 220. For example, the first state (or the second state) may be changed to the second state (or the first state) in response to a touch input to an executable object displayed within the display region. For example, the first state (or the second state) may be changed to the second state (or the first state) in response to a touch input having a contact point on the display region and a pressing strength greater than or equal to a reference strength. For example, the first state (or the second state) may be changed to the second state (or the first state), in response to a voice input received through a microphone of the electronic device 101. For example, the first state (or the second state) may be changed to the second state (or the first state) in response to an external force applied to the first housing 210 and/or the second housing 220 to move the second housing 220 with respect to the first housing 210. For example, the first state (or the second state) may be changed to the second state (or the first state), in response to a user input identified on an external electronic device (e.g., earbuds or smart watch) connected to the electronic device 101. However, it is not limited thereto.

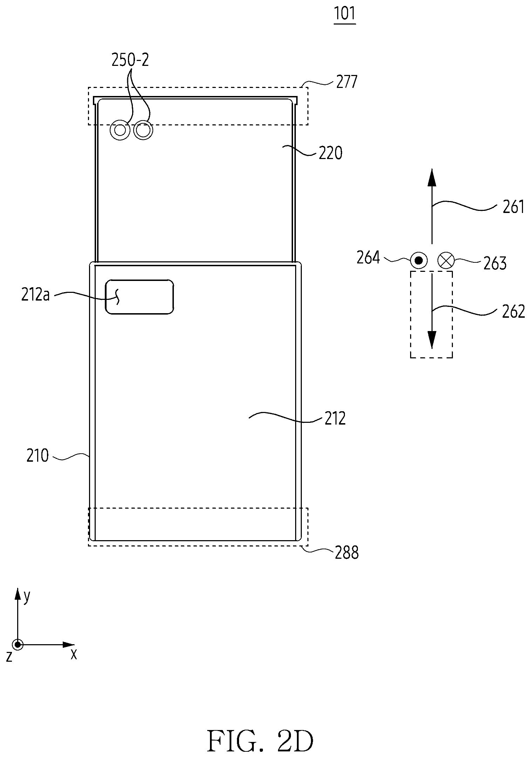

The second state may be exemplified through the description of FIGS. 2C and 2D.

FIG. 2C is a plan view of an exemplary electronic device in the second state.

Referring to FIG. 2C, the electronic device 101 may be in the second state. For example, in the second state, the second housing 220 may be movable with respect to the first housing 210 in the second direction 262 among the first direction 261 and the second direction 262. For example, in the second state, the second housing 220 may not be movable in the first direction 261 with respect to the first housing 210.

For example, in the second state, the display 230 may provide the display region having the largest size. For example, in the second state, the display region may correspond to a region 230c including a region 230a and a region 230b. For example, the region 230b, which was included in the first housing 210 in the first state, may be exposed in the second state. For example, in the second state, the region 230a may include a planar portion. However, it is not limited thereto. For example, the region 230a may also include a curved portion extending from the planar portion and positioned within an edge portion. For example, in the second state, the region 230b may include a planar portion among a planar portion and a curved portion, unlike the region 230a in the first state. However, it is not limited thereto. For example, the region 230b may include a curved portion extending from the planar portion of the region 230b and positioned within an edge portion.

For example, the second state may be referred to as a slide-out state or an opened state in terms of at least a portion of the second housing 220 being positioned outside the first housing 210. For example, the second state may be referred to as an extended state in terms of providing the display region having the largest size. However, it is not limited thereto.

For example, when the state of the electronic device 101 is changed from the first state to the second state, the first image sensor 250-1 facing the third direction 263 may move together with the region 230a according to movement of the second housing 220 in the first direction 261. For example, although not illustrated in FIG. 2C, when the state of the electronic device 101 is changed from the first state to the second state, one or more second image sensors 250-2 facing the fourth direction 264 may move according to movement of the second housing 220 in the first direction 261. For example, a relative positional relationship between the one or more second image sensors 250-2 and the structure may be changed according to the movement of the one or more second image sensors 250-2. For example, the change in the relative positional relationship may be illustrated through FIG. 2D.

FIG. 2D is a rear view of the electronic device 101 in the second state.

Referring to FIG. 2D, in the second state, the one or more second image sensors 250-2 may be positioned outside the structure. For example, in the second state, the one or more second image sensors 250-2 may be positioned outside the opening 212a in the plate 212. For example, since the one or more second image sensors 250-2 are positioned outside the opening 212a in the second state, the one or more second image sensors 250-2 may be exposed in the second state. For example, since the one or more second image sensors 250-2 are positioned outside the structure in the second state, the relative positional relationship in the second state may be different from the relative positional relationship in the first state.

For example, if the electronic device 101 does not include the structure, such as the opening 212a, the one or more second image sensors 250-2 in the second state may be exposed, unlike the one or more second image sensors 250-2 in the first state.

According to embodiments to be described later, a plurality of conductive portions and non-conductive portions of a frame for feed switching may be disposed in a first region 277 or a second region 288 of the electronic device 101.

Although not illustrated in FIGS. 2A, 2B, 2C, and 2D, the electronic device 101 may be in an intermediate state between the first state and the second state. For example, a size of the display region in the intermediate state may be greater than a size of the display region in the first state and less than a size of the display region in the second state. For example, the display region in the intermediate state may correspond to a region including the region 230a and a portion of the region 230b. For example, in the intermediate state, a portion of the region 230b may be exposed, and another portion (or remaining portion) of the region 230b may be covered by the first housing 210 or may be rolled into the first housing 210. However, it is not limited thereto.

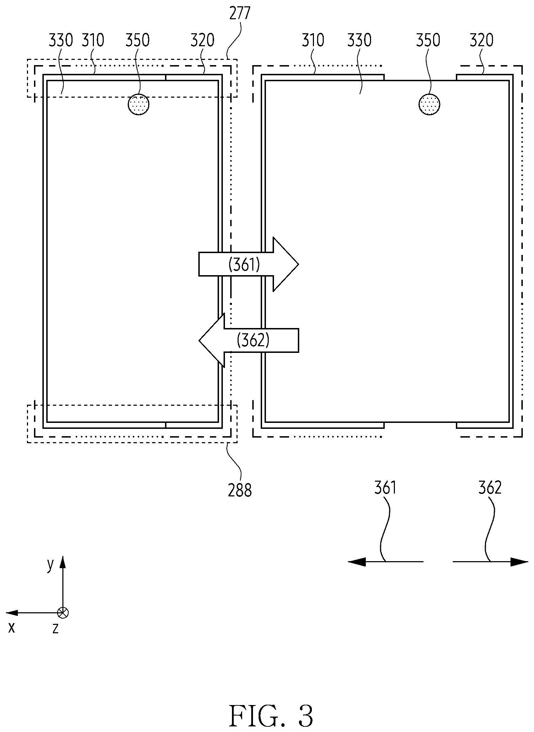

FIG. 3 illustrates another example of an electronic device 101 including a movable housing according to embodiments. In FIG. 3, an example of moving in a direction (e.g., (+) x-axis, (-) x-axis) different from a moving direction (e.g., (+) y-axis, (-) y-axis) of the second housing 220 in FIGS. 2A to 2D is described.

Referring to FIG. 3, the electronic device 101 may include a first housing 310, a second housing 320 movable with respect to the first housing 310 in a first direction 361 parallel to the x-axis or a second direction 362 parallel to the x-axis and opposite to the first direction 361, and a display 330.

The electronic device 101 may be in the first state. For example, in the first state, the second housing 320 may be movable with respect to the first housing 310 in the first direction 361 among the first direction 361 and the second direction 362. For example, in the first state, the second housing 320 may not be movable in the second direction 362 with respect to the first housing 310. For example, in the first state, the display 330 may provide a display region having the smallest size. For example, the first state may be referred to as a slide-in state or a closed state in terms of at least a portion of the second housing 320 being positioned within the first housing 310. For example, the first state may be referred to as a reduced state in terms of providing the display region having the smallest size. However, it is not limited thereto. For example, although not illustrated in FIG. 3, the first housing 310 may include an image sensor (not illustrated). For example, the second housing 320 may include one or more image sensors 350 in the camera module 180, exposed through a portion of the second housing 320.

The second housing 320 may be extracted from the first housing 310. Based on the second housing 320 being extracted from the first housing 310, a state of the electronic device 101 may be changed from the first state to the second state. Also, the second housing 320 may be inserted into the first housing 310. Based on the second housing 320 being inserted into the first housing 310, the state of the electronic device 101 may be changed from the second state to the first state.

The electronic device 101 may be in the second state. For example, in the second state, the second housing 320 may be movable with respect to the first housing 310 in the second direction 362 among the first direction 361 and the second direction 362. For example, in the second state, the second housing 320 may not be movable in the first direction 361 with respect to the first housing 310. For example, in the second state, the display 330 may provide a display region having the largest size. For example, the second state may be referred to as a slide-out state or an opened state in terms of at least a portion of the second housing 320 being positioned outside the first housing 310. For example, the second state may be referred to as an extended state in terms of providing the display region having the largest size. However, it is not limited thereto.

Hereinafter, operations of the electronic device 101 including the second housing 220 moving in a direction (e.g., (+) y-axis, (-) y-axis) of FIGS. 2A to 2D are described, but embodiments of the present disclosure are not limited thereto. Embodiments of the present disclosure may also be applied to the electronic devices 101 including the second housing 320 moving in a direction (e.g., (+) x-axis, (-) x-axis) of FIG. 3. According to embodiments to be described later, a plurality of conductive portions and non-conductive portions of a frame of the electronic device 101 may be disposed in a first region 277 or a second region 288 of the electronic device 101. Furthermore, for embodiments of the present disclosure, there is no limit to structural changes caused by expansion or reduction in horizontal or vertical directions, and segmentation portion structures and feed switching according to embodiments described below may also be applied to a bar-type or foldable electronic device.

An electronic device according to embodiments of the present disclosure may include a metal frame having multiple segmentation portions on a side. For example, the metal frame may include a plurality of conductive portions divided through a plurality of non-conductive portions. In a case of an electronic device that does not change, such as slide-in or slide-out, an antenna using the metal frame is easy to configure, but antennas included in an electronic device that change in slide-in or slide-out may be vulnerable to changes in grip performance. For example, if a user grips a feeding portion of the antenna, performance of the antenna may be reduced.

Embodiments of the present disclosure describe a technology for excluding the use of an antenna positioned on a side where performance changes are expected due to interference with a mechanical object (e.g., a movable housing), and using an antenna positioned on another side.

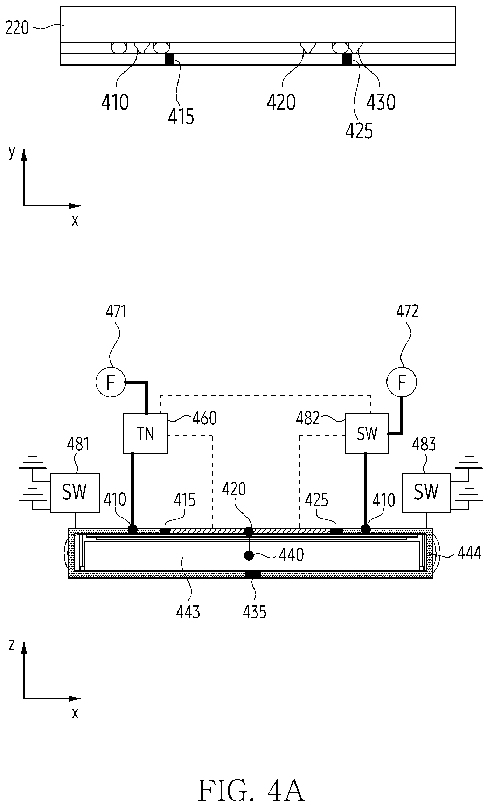

FIG. 4A illustrates an example of feed switching using a plurality of conductive portions of a frame according to embodiments.

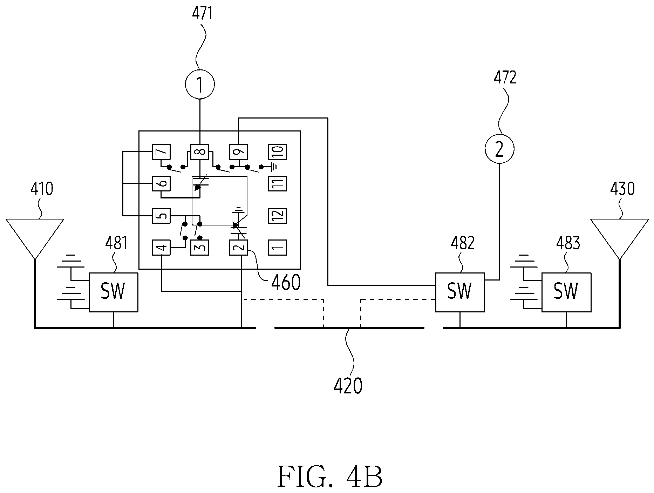

FIG. 4B illustrates an example of a circuit for a plurality of conductive portions of a frame according to embodiments.

Referring to FIG. 4A, an electronic device (e.g., the electronic device 101) may include a second housing 220. For example, the electronic device 101 may include a first housing 210 movable in the y-axis direction. The first movable housing 210 may be extracted from the second housing 220 or may be inserted into the second housing 220. In order to reduce an electrical effect due to changing a form of the electronic device 101 in accordance with the slide-in or slide-out, antennas for radiation may be formed in upper or lower surfaces of the electronic device different from the moving direction.

According to an embodiment, the electronic device 101 may include a metal frame disposed on a side 444 facing in a direction (e.g., the (-) y-axis direction). For example, the metal frame may include a plurality of conductive portions. For example, the plurality of conductive portions may include a first conductive portion 410, a second conductive portion 420, and a third conductive portion 430. The plurality of conductive portions may be segmented or spaced apart through non-conductive portions. For example, one non-conductive portion may be formed between a plurality of conductive portions. For example, a first non-conductive portion 415 may be disposed between the first conductive portion 410 and the second conductive portion 420. For example, a second non-conductive portion 425 may be disposed between the second conductive portion 420 and the third conductive portion 430. For example, a third non-conductive portion 435 may be disposed between the first conductive portion 410 and the third conductive portion 430. As an example, a plurality of conductive portions and a plurality of non-conductive portions implemented on the side 444 of the electronic device 101 may be formed in a ring shape on the side 444 of the electronic device 101. According to an embodiment, the electronic device 101 may have an antenna structure for performing feed switching, based on a user's grip attitude or a mounting form of the electronic device 101. According to an embodiment, a region 443 on the side 444 may be filled with a non-conductive member. For example, a non-conductive member such as the first non-conductive portion 415, the second non-conductive portion 425, and the third non-conductive portion 435 may be formed on the region 443 of the side 444, that is, a region inside the ring.

According to an embodiment, the metal frame of the electronic device 101 may support independent frequency bands through conductive portions 410, 420, and 430 distinguished through non-conductive segmentation portions. For example, the first conductive portion 410 may be used to transmit and/or receive a signal in a low-band (e.g., less than 1 gigahertz (GHz)) or an intermediate-band (e.g., greater than or equal to 1 GHz and less than 2.3 GHz). For example, the second conductive portion 420 may be used to transmit and/or receive a signal in the intermediate-band or a high-band (e.g., greater than or equal to 2.3 GHz). For example, the third conductive portion 430 may be used to transmit and/or receive a signal in the high-band (e.g., greater than or equal to 2.3 GHz). For another example, if the third conductive portion 430 has a length corresponding to a length of the first conductive portion 410 or the second conductive portion (e.g., within a certain range from the length of the first conductive portion 410 or the second conductive portion), it may be used to transmit and/or receive a signal in the low-band or the intermediate-band. According to an embodiment, the electronic device 101 may include a grip sensor 440. The electronic device 101 may detect a user's grip through the grip sensor 440 connected to the second conductive portion 420. For example, the electronic device 101 may detect the user's grip, based on identifying that a change in capacitance of the grip sensor 440 is greater than or equal to a threshold value. According to an embodiment, the second conductive portion 420 of the electronic device 101 may be connected to the first conductive portion 410 or electrically connected to the third conductive portion 430. For example, in a case that the second conductive portion 420 is connected to the first conductive portion 410, capacitance in a free state is to be biased to a side (e.g., the (-) x-axis direction), based on a certain direction (e.g., x-axis). For example, in a case that the second conductive portion 420 is connected to the third conductive portion 430, the capacitance in the free state is to be biased to a side (e.g., the (+) x-axis direction). Since this asymmetry increases a difference in the amount of change in capacitance between positions of the user's grip, the electronic device 101 may more easily identify the user's grip position (e.g., left or right).

According to an embodiment, the electronic device 101 may radiate, through feed switching 450, a signal through the first conductive portion 410 or the third conductive portion 430. In an embodiment, the electronic device 101 may selectively electrically connect the second conductive portion 420 to the first conductive portion 410 or to the third conductive portion 430. For example, the second conductive portion 420 may be referred to as a variable frame, a center frame, a delimiter frame, or an equivalent technical term. In an embodiment, in order to increase discrimination of the left grip or the right grip and provide various radiation patterns, the electronic device 101 may selectively electrically connect the second conductive portion 420 to the first conductive portion 410 or the third conductive portion 430. For example, the electronic device 101 may increase efficiency in a grip situation, by radiating a signal through the first conductive portion 410 and the second conductive portion 420 in the first state and radiating a signal through the second conductive portion 420 and the third conductive portion 430 in the second state. In addition, the electronic device 101 may reduce deterioration of radiation performance by reducing an effect on the human body in the grip situation.

The electronic device 101 may include a processor (e.g., the processor 120). The processor 120 of the electronic device 101 may provide a radiator through the first wireless communication circuit 471 or the second wireless communication circuit 472 with an RF signal processed through a communication module (e.g., the communication module 190 or RFIC).

In an embodiment, the electronic device 101 may provide the first conductive portion 410 through the first wireless communication circuit 471 with an RF signal. In an embodiment, the electronic device 101 may include a tuning circuit 460. The tuning circuit 460 may be electrically connected to the first conductive portion 410. For example, the electronic device 101 may control an electrical length of an antenna radiator including the first conductive portion 410 through a first switch circuit 481. In an embodiment, the electronic device 101 may provide the third conductive portion 430 through the first wireless communication circuit 471 or the second wireless communication circuit 472 with an RF signal. The electronic device 101 may include the tuning circuit 460 and a second switch circuit 482. The tuning circuit 460 may be electrically connected to the third conductive portion 430 through the second switch circuit 482. The electronic device 101 may control an electrical length of an antenna radiator including the third conductive portion 430 through a third switch circuit 483.

Referring to FIG. 4B, according to an embodiment, the second conductive portion 420 may be electrically connected to the first conductive portion 410 or the third conductive portion 430. For example, the electronic device 101 may electrically connect the first conductive portion 410 and the second conductive portion 420. For example, the electronic device 101 may feed a signal transmitted through the first wireless communication circuit 471 to the first conductive portion 410 and the second conductive portion 420. For example, the electronic device 101 may electrically connect the second conductive portion 420 and the third conductive portion 430. The electronic device 101 may electrically connect the third conductive portion 430 to the second conductive portion 420 through the second switch circuit 482. The electronic device 101 may feed a signal transmitted through the second wireless communication circuit 472 to the second conductive portion 420 and the third conductive portion 430.

In FIGS. 4A to 4B, the tuning circuit 460 and the second switch circuit 482 have been described, but embodiments of the present disclosure are not limited thereto. The tuning circuit 460 may be replaced with a switch circuit including one or more switches. In addition, the second switch circuit 482 may be replaced with a tuning circuit to perform more various functions. As an example, among the above-described examples, a switch circuit may be disposed instead of the tuning circuit 460, and another tuning circuit may be disposed instead of the second switch circuit 482. As another example, the electronic device 101 may include another switch circuit disposed instead of the tuning circuit 460 and a second switch circuit 482. As another example, the electronic device 101 may include a tuning circuit 460 and another tuning circuit disposed instead of the second switch circuit 482.

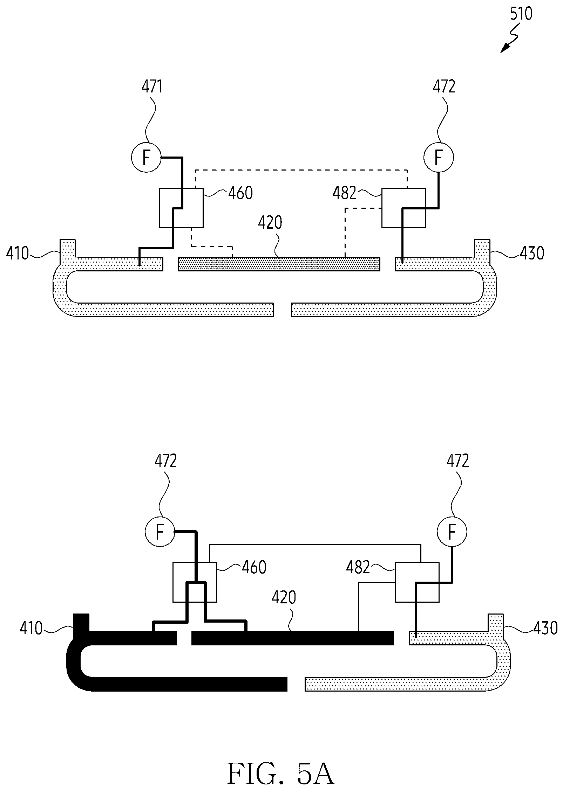

FIG. 5A illustrates an example of feeding, according to an embodiment. At least one of a plurality of conductive portions (e.g., the first conductive portion 410, the second conductive portion 420, or the third conductive portion 430) of FIGS. 4A and 4B may be fed, and the same reference number may indicate the same or similar description.

Referring to FIG. 5A, the electronic device 101 may include a first conductive portion 410, a second conductive portion 420, and a third conductive portion 430. For example, a metal frame formed on a side of the electronic device 101 may include the first conductive portion 410, the second conductive portion 420, and the third conductive portion 430, which are formed through a plurality of non-conductive portions.

According to an embodiment, in a free state 510, the electronic device 101 may transmit or receive a signal through the first conductive portion 410. The free state 510 means a state in which there is no obstacle (e.g., hand, head) around a radiator of the electronic device 101. The electronic device 101 may radiate an RF signal transmitted from the first wireless communication circuit 471 through the first conductive portion 410. The electronic device 101 may transmit or receive a signal through the third conductive portion 430. The electronic device 101 may radiate an RF signal transmitted from the first wireless communication circuit 471 through the third conductive portion 430. According to an embodiment, in the free state 510, the electronic device 101 may selectively electrically connect the second conductive portion 420 to the first conductive portion 410 or the third conductive portion 430. For example, the electronic device 101 may additionally use the second conductive portion 420 as a radiator, in addition to a single conductive portion. For example, in the free state 510, the electronic device 101 may transmit or receive a signal through the first conductive portion 410 and the second conductive portion 420.

According to an embodiment, the first conductive portion 410 and the third conductive portion 430 may be formed symmetrically around the second conductive portion. According to an embodiment, the first conductive portion 410 and the third conductive portion 430 designed to be close to symmetry may have substantially the same length to achieve substantially the same performance in a frequency band. For example, even if feeding is changed from the first conductive portion 410 to the third conductive portion 430, the radiation performance may be maintained.

According to an embodiment, the second conductive portion 420 may be selectively electrically connected to the first conductive portion 410 or the third conductive portion 430 according to a situation. For example, since the second conductive portion 420 is selectively coupled to the first conductive portion 410 or the third conductive portion 430, capacitance of the electronic device 101 may be asymmetric based on the second conductive portion 420. Through the above-described electrical connection, it is possible to react more sensitively to a change in capacitance of the electronic device 101. Therefore, the electronic device 101 may secure antenna performance through a radiator change of the antenna, by more accurately distinguishing between the user's left grip and the right grip.

Meanwhile, the free state 510 illustrated in FIG. 5A is merely an example, and other embodiments of the present disclosure are not limited thereto. For example, in the free state 510, the electronic device 101 may transmit or receive a signal through the second conductive portion 420 and the third conductive portion 430. For example, in the free state 510, the electronic device 101 may transmit or receive a signal through the first conductive portion 410 without the second conductive portion 420. For example, in a case that a grip is detected in the first conductive portion 410, the second conductive portion 420 may be used as a radiator of the antenna together with the third conductive portion 430.

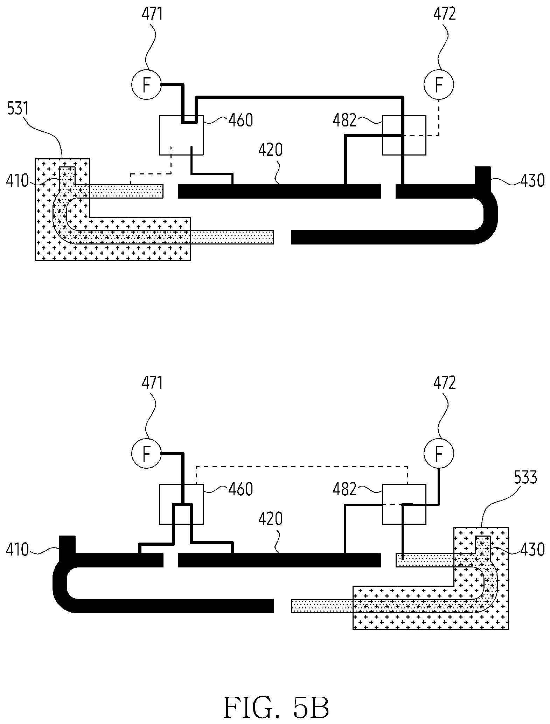

FIG. 5B illustrates an example of feed switching according to an embodiment. At least one of a plurality of conductive portions (e.g., the first conductive portion 410, the second conductive portion 420, or the third conductive portion 430) of FIGS. 4A and 4B may be used as an antenna radiator, and the same reference number may indicate the same or similar description.

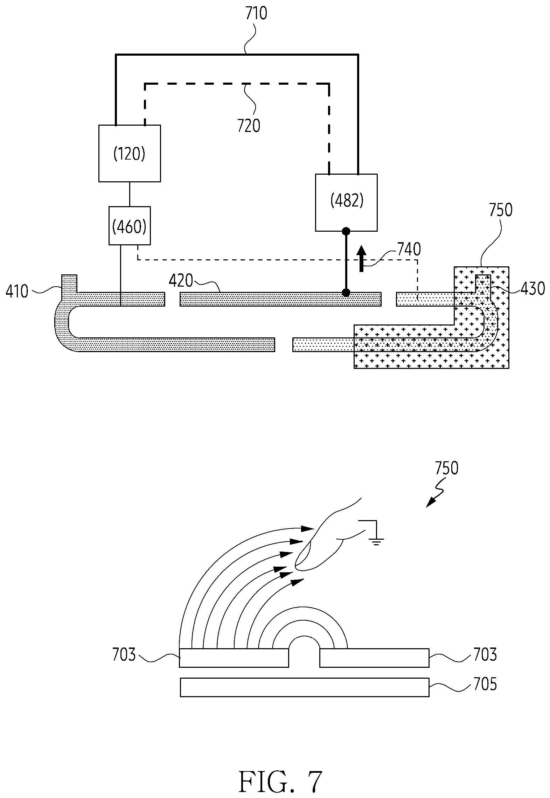

Referring to FIG. 5B, the electronic device 101 may transmit or receive a signal through the first conductive portion 410 and the second conductive portion 420, in a free state (e.g., the free state 510). Thereafter, the electronic device 101 may detect the user's grip through the grip sensor 440. For example, the electronic device 101 may detect a grip 531 on a side (e.g., a side facing the (-) x-axis direction) of the electronic device 101 through the grip sensor. The electronic device 101 may detect the grip 531 when the amount of change in capacitance of the grip sensor is greater than or equal to a threshold. Whether a grip is the grip 531 on a side or a grip 533 on another side opposite to the side may be determined by a set capacitance threshold or a threshold range. A method of detecting a position of the grip will be described in detail with reference to FIG. 7.

According to an embodiment, the electronic device 101 may change a feeding path of an RF signal, based on identifying that the grip 531 is detected on the side. The electronic device 101 may electrically connect the first wireless communication circuit 471 to the second conductive portion 420 and the third conductive portion 430, by controlling the tuning circuit 460 and the second switch circuit 482. The electronic device 101 may disconnect an electrical connection between the first conductive portion 410 and the first wireless communication circuit 471 through the tuning circuit 460. The electronic device 101 may establish an electrical connection between the third conductive portion 430 and the first wireless communication circuit 471 through the tuning circuit 460 and the second switch circuit 482. The electronic device 101 may reduce performance reduction of the antenna due to the grip, through a conductive portion (e.g., the third conductive portion 430) disposed in a direction opposite to the side in which the user's grip is detected. In addition, the electronic device 101 may improve radiation performance by transmitting or receiving a signal through both the second conductive portion 420 and the third conductive portion 430.

According to an embodiment, the electronic device 101 may detect a grip 533 on another side (e.g., left) of the electronic device 101 through the grip sensor 440. The electronic device 101 may detect the grip 533 when the amount of change in capacitance of the grip sensor is greater than or equal to a threshold. As described above, a method of detecting a position of a grip will be described in detail with reference to FIG. 7.

According to an embodiment, the electronic device 101 may change a feeding path of an RF signal based on identifying that the grip 533 is detected on the side. For example, the electronic device 101 may electrically connect the first wireless communication circuit 471 to the second conductive portion 420 and the first conductive portion 410, by controlling the tuning circuit 460 and the second switch circuit 482. The electronic device 101 may disconnect an electrical connection between the third conductive portion 430 and the first wireless communication circuit 471 through the tuning circuit 460 and the second switch circuit 482. For example, the electronic device 101 may establish an electrical connection between the first conductive portion 410 and the second conductive portion 420 and the first wireless communication circuit 471, through the tuning circuit 460.

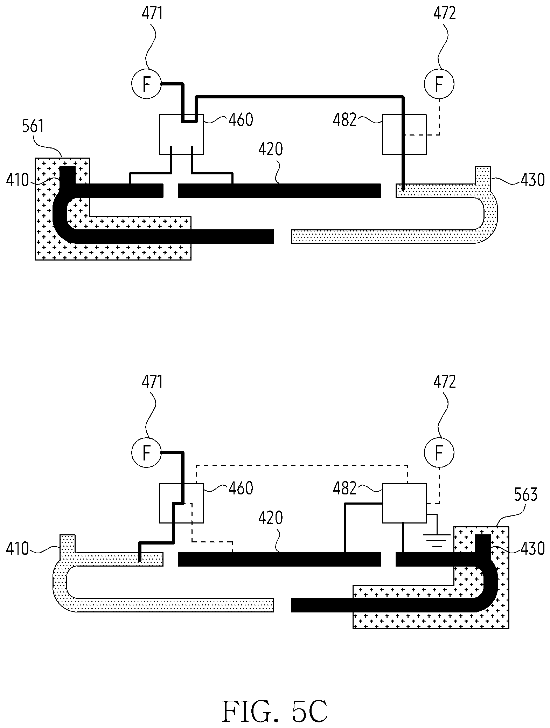

FIG. 5C illustrates an example of grounding according to an embodiment. At least one of a plurality of conductive portions (e.g., the first conductive portion 410, the second conductive portion 420, or the third conductive portion 430) of FIGS. 4A and 4B may be used for grounding, and the same reference number may indicate the same or similar description.

Referring to FIG. 5C, according to an embodiment, the electronic device 101 may change a conductive portion for grounding, based on a detected grip position. The contact of the body causes a change in capacitance. Meanwhile, the body may be used for grounding. The electronic device 101 may set a conductive portion for grounding, based on a position where the user's grip is detected.

According to an embodiment, if a user's grip 561 is detected in a region (e.g., a right side of the electronic device 101) adjacent to the first conductive portion 410, the electronic device 101 may connect the first conductive portion 410 to a grounding. The electronic device 101 may change the feeding path to a path of the third conductive portion 430 and reconfigure the tuning circuit 460 so that the first conductive portion 410 is connected to the grounding. For example, the electronic device 101 may electrically connect the tuning circuit 460 with the third conductive portion 430 for grounding. For example, the electronic device 101 may electrically connect the second conductive portion 420 with the first conductive portion 410 for grounding. The electronic device 101 may radiate a signal through the third conductive portion 430, based on grounding using the first conductive portion 41 and the second conductive portion 420. The electronic device 101 may electrically connect the first conductive portion 410 and the second conductive portion 420 to a grounding path through the tuning circuit 460. The electronic device 101 may electrically connect the third conductive portion 430 to the first wireless communication circuit 471 through the tuning circuit 460 and the second switch circuit 482.

As the first conductive portion 410 and the second conductive portion 420 are connected to grounding, a change in impedance of the first conductive portion 410 and the second conductive portion 420 due to the grip 561 may be reduced. Accordingly, as the impedance change of the adjacent third conductive portion 430 is reduced, the deterioration of the radiation performance of the third conductive portion 430 operating as an antenna radiator may be reduced. FIG. 5C illustrates an example in which both the first conductive portion 410 and the second conductive portion 420 are connected to the grounding, but embodiments of the present disclosure are not limited thereto. For example, each of the first conductive portion 410 and the second conductive portion 420 may be separately connected to the grounding. In addition, instead of grounding, the first conductive portion 410 and/or the second conductive portion 420 may be floating (i.e., in an insulation state).

According to an embodiment, if a user's grip is detected in a region (e.g., a left side of the electronic device 101) adjacent to the third conductive portion 430, the electronic device 101 may connect the third conductive portion 430 to the grounding. The electronic device 101 may change a feeding path to a path of the first conductive portion 410 and reconfigure the second switch circuit 482 so that the third conductive portion 430 is connected to the grounding. A connection of the second conductive portion 420 may operate in the same manner as the third conductive portion 430. The connection of the second conductive portion 420 may be used to reduce the influence caused by the grip 563 and adjust a resonance frequency of the first conductive portion 410. If the second conductive portion 420 is not connected to the grounding, the second conductive portion 420 may operate as a coupling pattern of the first conductive portion 410. For example, the electronic device 101 may electrically connect the second conductive portion 420 with the third conductive portion 430 for grounding. The electronic device 101 may radiate a signal through the first conductive portion 410, based on grounding using the second conductive portion 420 and the third conductive portion 430. The electronic device 101 may electrically connect the second conductive portion 420 and the third conductive portion 430 to the grounding path through the tuning circuit 460 and the second switch circuit 482. The electronic device 101 may electrically connect the first conductive portion 410 to the first wireless communication circuit 471 through the tuning circuit 460.

As the second conductive portion 420 and the third conductive portion 430 are connected to the grounding, a change in impedance of the second conductive portion 420 and the third conductive portion 430 due to the grip 563 may be reduced. As the change in impedance is reduced, the deterioration of the radiation performance of the first conductive portion 410 operating as an antenna radiator may be reduced. FIG. 5C illustrates an example in which both the second conductive portion 420 and the third conductive portion 430 are connected to the grounding, but embodiments of the present disclosure are not limited thereto. For example, each of the second conductive portion 420 and the third conductive portion 430 may be separately connected to the grounding. In addition, the second conductive portion 420 and/or the third conductive portion 430 may be floating (i.e., in an insulation state).

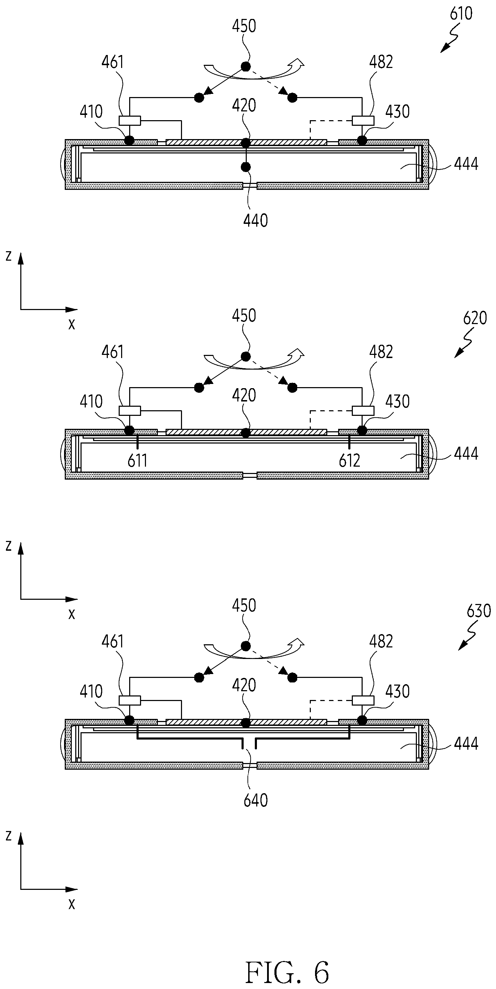

FIG. 6 illustrates examples of a grip sensor according to an embodiment. An electronic device (e.g., the electronic device 101) may include at least one grip sensor to detect the amount of change in capacitance. A second conductive portion 420 according to embodiments may be used as an antenna radiator or an electrode for a grip sensor, together with a first conductive portion 410 or a third conductive portion 430. Hereinafter, in FIG. 6, an example in which the second conductive portion 420 operates as an electrode for a grip sensor is described.

Referring to FIG. 6, the electronic device 101 may include a metal frame disposed on a side 444 facing a direction (e.g., the (-) y-axis direction). The frame may include a plurality of conductive portions. For example, the plurality of conductive portions may include the first conductive portion 410, the second conductive portion 420, and the third conductive portion 430.

According to an embodiment, referring to a circuit diagram 610, the electronic device 101 may include at least one grip sensor 440. The at least one grip sensor 440 may be connected to the second conductive portion 420. A processor (e.g., the processor 120) of the electronic device 101 may obtain information on a total capacitance from the at least one grip sensor 440 connected to the second conductive portion 420. The electronic device 101 may detect a user's grip based on the amount of change in capacitance in the second conductive portion 420. According to an embodiment, in order to distinguish the user's left grip or right grip, the second conductive portion 420 may be electrically connected to the first conductive portion 410 or the third conductive portion 430. As a size of a basic capacitance increases in a free state, a difference between the capacitance according to the left grip of the user and the capacitance according to the right grip may increase. The electronic device 101 may identify a position of the grip based on the amount of change in capacitance.

According to an embodiment, referring to a circuit diagram 620, the electronic device 101 may include two grip sensors 611 and 612. The electronic device 101 may include a first grip sensor 611 disposed on a right side (e.g., the (-) x-axis direction) and a second grip sensor 612 disposed on a left side (e.g., the (+) x-axis direction), based on a certain direction (e.g., the z-axis direction). A processor (e.g., the processor 120) of the electronic device 101 may obtain information on the capacitance from the first grip sensor 611 connected to the first conductive portion 410. For example, the electronic device 101 may detect the user's right grip (e.g., the (-) x-axis direction) based on the amount of change in capacitance from the first grip sensor 611. The processor 120 of the electronic device 101 may obtain information on the capacitance from the second grip sensor 612 connected to the third conductive portion 430. For example, the electronic device 101 may detect the user's left grip (e.g., the (+) x-axis direction) based on the amount of change in capacitance from the second grip sensor 612.

According to an embodiment, referring to a circuit diagram 630, the electronic device 101 may include one 2-port grip sensor 640. A first port of the 2-port grip sensor 640 may be connected to the first conductive portion 410. A second port of the 2-port grip sensor 640 may be connected to the second conductive portion 420. The 2-port grip sensor 640 may provide the processor 120 of the electronic device 101 with information on capacitance. The processor 120 of the electronic device 101 may detect the user's left grip (e.g., the (+) x-axis direction) or the user's right grip (e.g., the (-) x-axis direction), based on the amount of change in the capacitance. A method of detecting a position of the grip will be described in detail with reference to FIG. 7.

FIG. 7 illustrates an example of capacitance sensing according to an embodiment. An electronic device (e.g., the electronic device 101) may transmit or receive a signal through a plurality of conductive portions included in a frame of a lower cross section.

Referring to FIG. 7, the electronic device 101 may include a frame forming at least a portion of a side. The frame may include a plurality of conductive portions. For example, the plurality of conductive portions may include a first conductive portion 410, a second conductive portion 420, and a third conductive portion 430. Non-conductive portions may be disposed between the plurality of conductive portions. According to an embodiment, the electronic device 101 may include a grip sensor 440. The electronic device 101 may sense a user's grip through the grip sensor 440 connected to the second conductive portion 420.

The grip sensor 440 may obtain capacitance being changed, such as a change amount of the capacitance. The grip sensor 440 may detect a basic capacitance Cₚ (may be referred to as parasitic capacitance) caused by a grounding member 703. Thereafter, if a body part 750 (e.g., finger, palm, or hand) is positioned within a certain distance from the grip sensor 440, the capacitance is changed. The grip sensor 440 may obtain a total capacitance Cₜₒₜₐₗ 740. Since the body part 750 may be considered as grounding, the electronic device 101 may obtain a change amount of the capacitance, based on the total capacitance 740 and the base capacitance.

The processor 120 may obtain information on the capacitance from the grip sensor 440. The processor 120 may obtain a change amount Cₜ of the capacitance, based on information on a current capacitance (e.g., the total capacitance Cₜₒₜₐₗ 740) and information on the basic capacitance. The processor 120 may obtain a change rate (e.g., Cₜ/Cₚ), based on the change amount of the capacitance. The processor 120 may detect a user's grip on a frame, based on the change amount or the change rate of the capacitance. According to an embodiment, the processor 120 may identify whether a detected grip is a left grip (e.g., a grip in which at least a portion of the third conductive portion 430 overlaps) or a right grip (e.g., a grip in which at least a portion of the third conductive portion 430 overlaps).

According to an embodiment, the processor 120 may obtain a change rate 710 greater than or equal to a first threshold (e.g., about 10%) and less than a second threshold (e.g., about 30%). In a case that the change rate is greater than or equal to the first threshold (e.g., about 10%) and less than the second threshold (e.g., about 30%), the processor 120 may detect a right grip. The processor 120 may obtain a change rate 720 greater than or equal to the second threshold (e.g., about 30%). In a case that the change rate is greater than or equal to the second threshold (e.g., about 30%), the processor 120 may detect a left grip. As the second conductive portion 420 connected to the grip sensor 440 is electrically connected to the first conductive portion 410, the basic capacitance may be set to be close to the capacitance when the left grip. Therefore, the change rate may be relatively low when the left grip, but the change rate may be high when the right grip. Therefore, a condition for detecting the left grip (e.g., greater than or equal to the first threshold and less than the second threshold) and a condition for detecting the right grip (e.g., greater than or equal to the second threshold) may be different.

The processor 120 may determine a grip state, based on the change amount or the change rate of the capacitance. The grip state may indicate whether a detected grip is a left grip (e.g., a grip in which at least a portion of the third conductive portion 430 overlaps) or a right grip (e.g., a grip in which at least a portion of the third conductive portion 430 overlaps). As an example, a state in which a grip is not detected may be a zero state, a state in which the left grip is detected may be a first state, and a state in which the right grip is detected may be a second state. In an embodiment, the processor 120 may determine an antenna configuration, based on the grip state. Herein, the antenna configuration means which conductive portion is to be used as a radiator of the antenna. In an embodiment, the processor 120 may control the tuning circuit 461 and/or a switch (e.g., the second switch circuit 482) for a feeding path according to the antenna configuration. For example, in a case that a left grip by the body part 750 is detected, the processor 120 may change the feeding path. For example, the processor 120 may change the feeding path by providing a control signal to a switch. In an embodiment, the processor 120 may electrically connect the first conductive portion 410 and the second conductive portion 420 and a feeding portion through the tuning circuit 461. RFFE may transmit an RF signal to the first conductive portion 410 and the third conductive portion 430 through the tuning circuit 461 (or a switch (e.g., the second switch circuit 482).

FIG. 7 describes capacitance sensing through the grip sensor 440 in a state in which the first conductive portion 410 and the second conductive portion 420 are electrically connected, but embodiments of the present disclosure are not limited thereto. According to another embodiment, capacitance sensing through the grip sensor 440 may be performed in a state in which the second conductive portion 420 and the third conductive portion 430 are electrically connected.

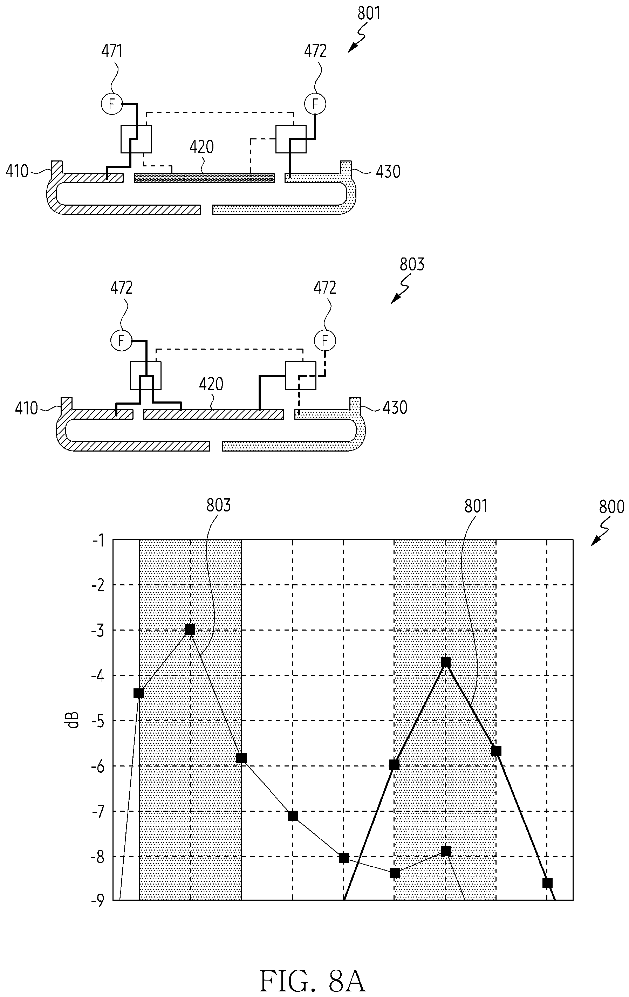

FIG. 8A illustrates an example of band switching according to an embodiment.

Referring to FIG. 8A, the electronic device 101 may communicate through at least one of a plurality of conductive portions formed in a frame. The plurality of conductive portions may include a first conductive portion 410, a second conductive portion 420, and a third conductive portion 430. A graph 800 represents radiation efficiency for each frequency. A horizontal axis indicates a frequency (unit: GHz), and a vertical axis indicates radiation efficiency (unit: decibel (dB)).

In a first state 801, the electronic device 101 may provide a first RF signal of a first wireless communication circuit 471 only to the first conductive portion 410. The first state 801 may be a free state in which a grip is not detected around the electronic device 101. The first conductive portion 410 may function as an antenna of the electronic device 101. The radiation efficiency of the antenna may be the highest at a first frequency (e.g., 0.88 GHz).

In a second state 803, the electronic device 101 may provide an RF signal of the first wireless communication circuit 471 to the first conductive portion 410 and the second conductive portion 420. The second state 803 may be a free state in which a grip is not detected around the electronic device 101. The first conductive portion 410 and the second conductive portion 420 may function as an antenna of the electronic device 101. The radiation efficiency of the antenna may be the highest at a second frequency (e.g., 0.78 GHz).

A resonant frequency may vary according to a conductive portion electrically charged as illustrated in the graph 800. According to an embodiment, the electronic device 101 may support multiple bands according to movement of the resonant frequency. According to an embodiment, the electronic device 101 may perform band switching according to movement of the resonant frequency.

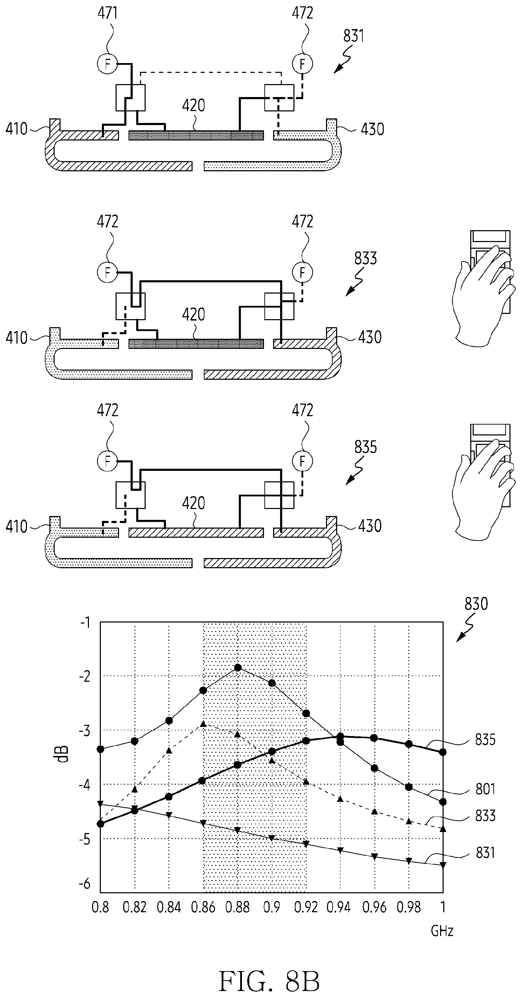

FIG. 8B illustrates an example of performance in a beside hand (BH) environment of feed switching according to an embodiment. The BH environment refers to an environment in which a user's hand grips an electronic device (e.g., the electronic device 101).

Referring to FIG. 8B, the electronic device 101 may communicate through at least one of a plurality of conductive portions formed in a frame. The plurality of conductive portions may include a first conductive portion 410, a second conductive portion 420, and a third conductive portion 430. A graph 830 illustrates radiation efficiency for each frequency in the BH environment. A horizontal axis indicates a frequency (unit: GHz), and a vertical axis indicates radiation efficiency (unit: decibel (dB)).

In a first state 831, the electronic device 101 may provide a first RF signal of the first wireless communication circuit 471 only to the first conductive portion 410. The first conductive portion 410 may function as an antenna of the electronic device 101. In a second state 833, the electronic device 101 may provide a second RF signal of the first wireless communication circuit 471 only to the third conductive portion 430. In the second state 833, the second conductive portion 420 may be used for grounding. The third conductive portion 430 may function as an antenna of the electronic device 101. In a third state 835, the electronic device 101 may provide a third RF signal of the first wireless communication circuit 471 to the second conductive portion 420 and the third conductive portion 430. The second conductive portion 420 and the third conductive portion 430 may function as an antenna of the electronic device 101.

Referring to the graph 830, in the first state 831, due to the user's grip, a region of the first conductive portion 410 overlaps a part (e.g., hand) of the user's body, so the radiation performance is lowered. However, it may be identified that radiation performance is improved by using a conductive portion (e.g., the third conductive portion 430) positioned in a direction opposite to the grip through a change in the feeding path. The electronic device 101 may provide radiation performance suitable for a required frequency, by using the second conductive portion 420 as the grounding or the radiator. For example, at about 0.86 GHz, it may be identified that an antenna configuration according to the second state 833 (e.g., the second conductive portion 420 is used for grounding and the third conductive portion 430 is used for radiation) provides the closest performance to the free state (e.g., the first state 801 of FIG. 8A). Furthermore, for example, at about 0.92 GHz, it may be identified that an antenna configuration according to the third state 835 (e.g., both the second conductive portion 420 and the third conductive portion 430 are used as a radiator) provides the closest performance to the free state (e.g., the first state 801 of FIG. 8A).

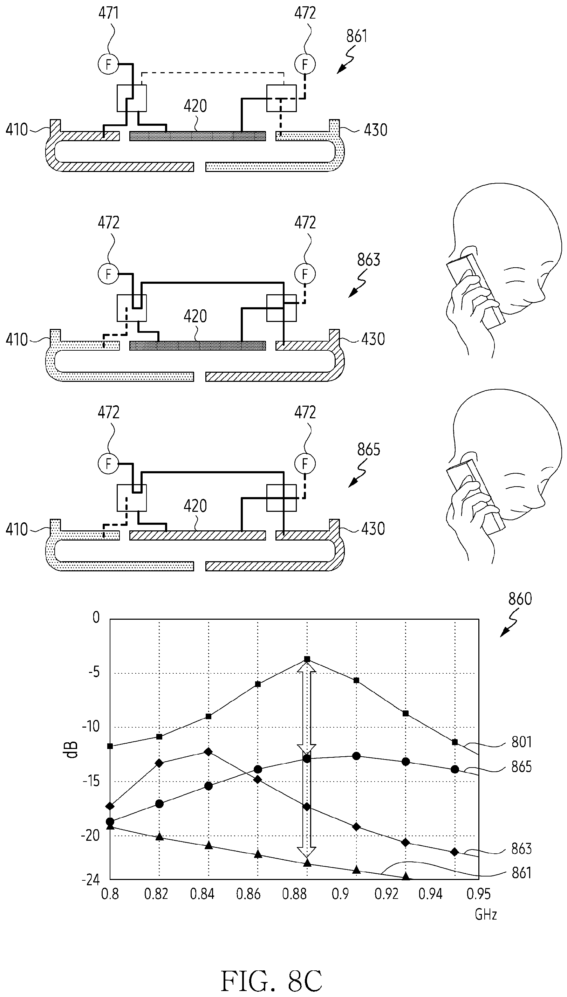

FIG. 8C illustrates an example of performance in a beside head and hand (BHH) environment of feed switching according to an embodiment. The BHH environment refers to an environment (e.g., call) in which the user's hand grips an electronic device (e.g., the electronic device 101) and the user moves the electronic device 101 to the side of the user's head.

Referring to FIG. 8C, the electronic device 101 may communicate through at least one of a plurality of conductive portions formed in a frame. For example, the plurality of conductive portions may include a first conductive portion 410, a second conductive portion 420, and a third conductive portion 430. A graph 860 illustrates radiation efficiency for each frequency in the BHH environment. A horizontal axis indicates a frequency (unit: GHz), and a vertical axis indicates radiation efficiency (unit: dB).

In a first state 861, the electronic device 101 may provide a first RF signal of the first wireless communication circuit 471 only to the first conductive portion 410. The first conductive portion 410 may function as an antenna of the electronic device 101. In a second state 863, the electronic device 101 may provide a second RF signal of the first wireless communication circuit 471 only to the third conductive portion 430. In the second state 863, the second conductive portion 420 may be used for grounding. The third conductive portion 430 may function as an antenna of the electronic device 101. In a third state 865, the electronic device 101 may provide a third RF signal of the first wireless communication circuit 471 to the second conductive portion 420 and the third conductive portion 430. The second conductive portion 420 and the third conductive portion 430 may function as an antenna of the electronic device 101.

Referring to the graph 860, in the first state 1061, due to the user's grip, a region of the first conductive portion 410 overlaps a part (e.g., hand, head) of the user's body, so the radiation performance is lowered. However, it may be identified that radiation performance is improved by using a conductive portion (e.g., the third conductive portion 430) positioned in a direction opposite to the grip through a change in the feeding path. The electronic device 101 may provide radiation performance suitable for a required frequency by using the second conductive portion 420 as the grounding or as the radiator. For example, at about 0.88 GHz, it may be identified that an antenna configuration according to the third state 865 (e.g., both the second conductive portion 420 and the third conductive portion 430 are used as a radiator) provides the closest performance to the free state (e.g., the first state 801 of FIG. 8A).

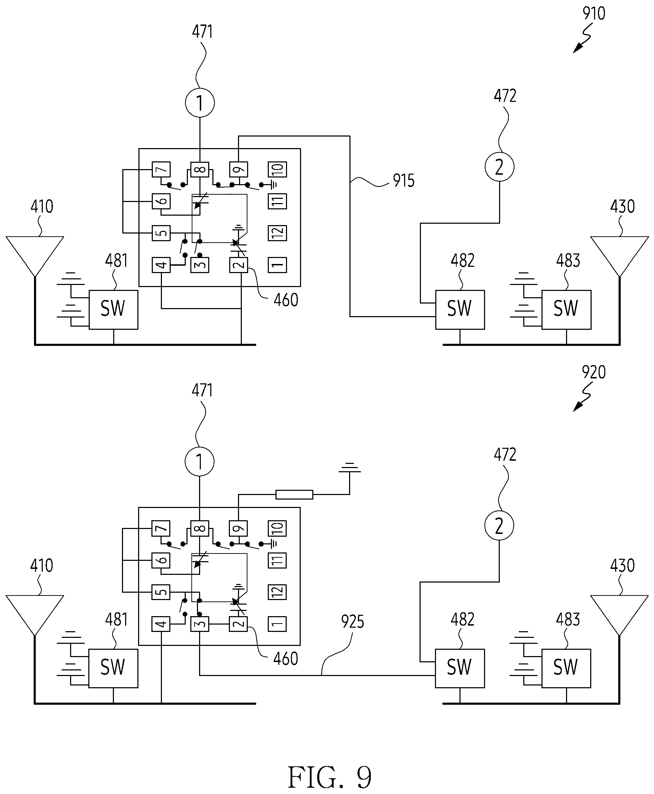

FIG. 9 illustrates a tuning circuit and a switching circuit according to an embodiment. When feed switching is determined based on a change in capacitance, paths from a feeding portion to an antenna may be changed. In FIG. 9, in a case that a second conductive portion 420 is used as an electrode (e.g., an electrode of a grip sensor) rather than a radiator, circuits such as FIG. 9 (e.g., feeding circuit 910 and feeding circuit 920) may be used. Due to the second conductive portion 420, isolation between a first conductive portion 410 and a third conductive portion 430 may be increased.

Referring to FIG. 9, the electronic device 101 may include a tuning circuit 460, a first switch circuit 481, a second switch circuit 482, and/or a third switch circuit 483 to change paths from the feeding portion to the antenna.

According to an embodiment, the tuning circuit 460 may include a plurality of ports or at least one switch. For example, at least one of the plurality of ports of the tuning circuit 460 may be used for impedance matching or band switching. For example, at least one switch of the tuning circuit 460 may change a path of an RF signal by connecting or not connecting at least one of the plurality of ports. As an example, in the feeding circuit 910, the tuning circuit 460 may obtain an RF signal supplied from the first wireless communication circuit 471 through a first port (e.g., port 8). The tuning circuit 460 may connect the first port and a second port (e.g., port 9) by using a switch. The tuning circuit 460 may provide an RF signal of the first wireless communication circuit 471 to the second switch circuit 482 through the second port. As another example, in the feeding circuit 920, the tuning circuit 460 may obtain an RF signal supplied from the first wireless communication circuit 471 through the first port (e.g., port 8). The tuning circuit 460 may electrically connect the first port and a third port (e.g., port 3) by using a switch. The tuning circuit 460 may provide an RF signal of the first wireless communication circuit 471 to the second switch circuit 482 through the third port.

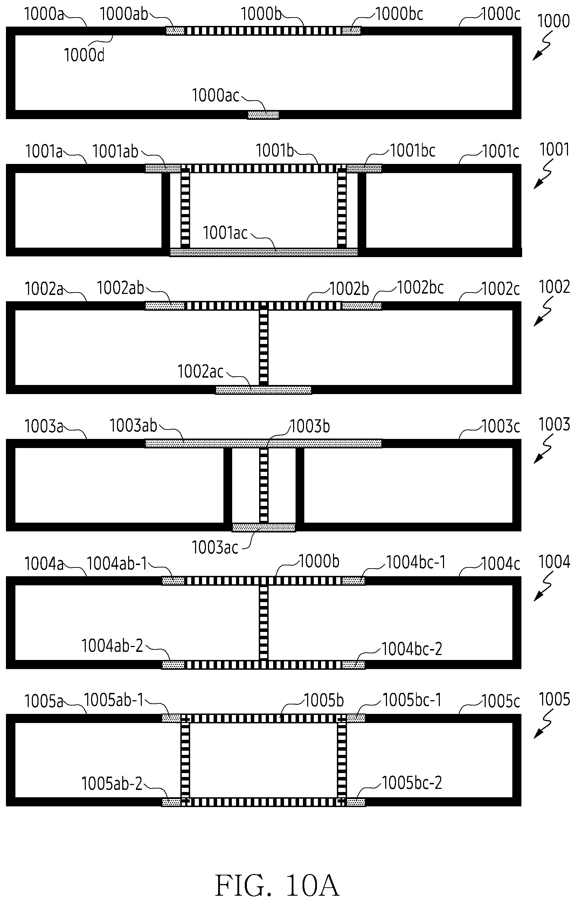

FIGS. 10A to 10B illustrate examples of a plurality of conductive portions of a metal frame according to embodiments. According to an embodiment, the electronic device 101 may use conductive portions of a frame disposed at an upper region (e.g., the first region 277 of FIG. 2D, the first region 277 of FIG. 3) or a lower region (e.g., the second region 288 of FIG. 2D, the second region 288 of FIG. 3) of the electronic device 101 as a radiator of an antenna. A shape or length of the conductive portion used as the radiator of the antenna may be determined by an antenna characteristic (e.g., S₁₁) or radiation efficiency in a frequency band. In an embodiment, for capacitance sensing and feed switching, the conductive portions may have various shapes.

Referring to FIG. 10A, according to an embodiment, a frame 1000 of the electronic device 101 may include a first conductive portion 1000a (e.g., the first conductive portion 410), a second conductive portion 1000b (e.g., the second conductive portion 420), and a third conductive portion 1000c (e.g., the third conductive portion 430). Each conductive portion may be disposed between non-conductive portions. For example, the first conductive portion 1000a may be disposed between a non-conductive portion 1000ab and a non-conductive portion 1000ac. The second conductive portion 1000b may be disposed between the non-conductive portion 1000ab and a non-conductive portion 1000bc. The third conductive portion 1000c may be disposed between the non-conductive portion 1000bc and the non-conductive portion 1000ac. According to an embodiment, the first conductive portion 1000a, the second conductive portion 1000b, and the third conductive portion 1000c may be disposed along a peripheral region 1000d of the frame 1000. For example, the first conductive portion 1000a, the second conductive portion 1000b, and the third conductive portion 1000c may form a ring shape together with the plurality of segmentation portions. The frame 1000 of the electronic device 101 may be disposed on a side of the electronic device 101. For example, the first conductive portion 1000b and the third conductive portion 1000b may have a ' 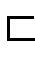 ' shape. The second conductive portion 1000b may be formed across the center region of the side. For example, the first conductive portion 1000a and the third conductive portion 1000c may be substantially symmetrical around the second conductive portion 1000b.

According to an embodiment, a frame 1001 of the electronic device 101 may include a first conductive portion 1001a (e.g., the first conductive portion 410), a second conductive portion 1001b (e.g., the second conductive portion 420), and a third conductive portion 1001c (e.g., the third conductive portion 430). Along a periphery of the frame 1001, at least one region of the conductive portion may be formed between non-conductive portions. For example, at least a portion of the first conductive portion 1001a may be disposed between a non-conductive portion 1001ab and a non-conductive portion 1001ac. At least a portion of the second conductive portion 1001b may be disposed between the non-conductive portion 1001ab and a non-conductive portion 1001bc. At least a portion of the third conductive portion 1001c may be disposed between the non-conductive portion 1001bc and the non-conductive portion 1001ac. The frame 1001 of the electronic device 101 may form at least a portion of a side (e.g., lateral side) of the electronic device 101. A non-conductive portion forming at least a portion of a side may be disposed within the side, in addition to a periphery of a side of the frame 1001. The conductive portions may be formed to be spaced apart from each other within the side, due to the non-conductive portions forming at least a portion of a side. For example, the first conductive portion 1001a may have an '□' shape in which an region is opened. For example, the third conductive portion 1001b may have an '□' shape in which an region is opened. The second conductive portion 1001b may be formed across a center region of the side. As an example, the second conductive portion 1001b may have a ' 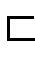 ' shape. Furthermore, the first conductive portion 1001a and the third conductive portion 1001c may be substantially symmetrical around the second conductive portion 1001b.

According to an embodiment, a frame 1002 of the electronic device 101 may include a first conductive portion 1002a (e.g., the first conductive portion 410), a second conductive portion 1002b (e.g., the second conductive portion 420), and a third conductive portion 1002c (e.g., the third conductive portion 430). Along a periphery of the frame 1002, at least one region of the conductive portion may be formed between non-conductive portions. For example, the first conductive portion 1002a may be disposed between a non-conductive portion 1002ab and a non-conductive portion 1002ac. At least a portion of the second conductive portion 1002b may be disposed between the non-conductive portion 1002ab and a non-conductive portion 1002bc. The third conductive portion 1002c may be disposed between the non-conductive portion 1002bc and the non-conductive portion 1002ac. According to an embodiment, the second conductive portion 1002b may be disposed within a side of the frame 1002. As an example, each of a first conductive portion 1004a and a third conductive portion 1004b may have a ' 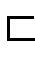 ' shape. The second conductive portion 1002b may be formed across a center region of the side. As an example, the second conductive portion 1004b may have a 'T' shape. In addition, the first conductive portion 1002a and the third conductive portion 1002c may be substantially symmetrical around the second conductive portion 1002b.

According to an embodiment, a frame 1003 of the electronic device 101 may include a first conductive portion 1003a (e.g., the first conductive portion 410), a second conductive portion 1003b (e.g., the second conductive portion 420), and a third conductive portion 1003c (e.g., the third conductive portion 430). Along a periphery of the frame 1003, at least one region of the conductive portion may be formed between non-conductive portions. For example, the first conductive portion 1003a may be disposed between a non-conductive portion 1003ab and a non-conductive portion 1003ac. The third conductive portion 1003c may be disposed between the non-conductive portion 1003ab and a non-conductive portion 1003ac. In addition, for example, the second conductive portion 1003b may be disposed inside a side of the frame 1003.

The frame 1003 of the electronic device 101 may form at least a portion of a side of the electronic device 101. A non-conductive portion forming at least a portion of a side may be disposed within the side, in addition to the periphery of the side of the frame 1003. The conductive portions may be formed to be spaced apart from each other due to the non-conductive portions forming at least a portion of the side. For example, the first conductive portion 1003a may have an '□' shape in which a region is opened. For example, the third conductive portion 1003b may have an '□' shape in which a region is opened. For example, the second conductive portion 1003b may be formed across a center region of the side. As an example, the second conductive portion 1003b may have a shape of ' | '. In addition, the first conductive portion 1003a and the third conductive portion 1003c may be substantially symmetrical around the second conductive portion 1003b.

According to an embodiment, a frame 1004 of the electronic device 101 may include a first conductive portion 1004a (e.g., the first conductive portion 410), a second conductive portion 1004b (e.g., the second conductive portion 420), and a third conductive portion 1004c (e.g., the third conductive portion 430). Along a periphery of the frame 1004, at least one region of the conductive portion may be formed between the non-conductive portions. For example, the first conductive portion 1004a may be disposed between a non-conductive portion 1004ab-1 and a non-conductive portion 1004ab-2. The first conductive portion 1004a may be disposed between a non-conductive portion 1004bc-1 and a non-conductive portion 1004bc-2. In addition, for example, at least one region of the second conductive portion 1004b may be disposed between the non-conductive portion 1004ab-1 and the non-conductive portion 1004bc-1. At least another region of the second conductive portion 1004b may be disposed between the non-conductive portion 1004ab-2 and the non-conductive portion 1004bc-2.

The frame 1004 of the electronic device 101 may form at least a portion of a side of the electronic device 101. According to an embodiment, the first conductive portion 1004a, the second conductive portion 1004b, and the third conductive portion 1004c may be disposed along the periphery region of the frame 1004. As an example, each of the first conductive portion 1004a and the third conductive portion 1004b may have a ' 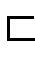 ' shape. The second conductive portion 1004b may be formed across a center region of the side. As an example, the second conductive portion 1004b may have a ' 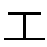 ' shape. Furthermore, the first conductive portion 1004a and the third conductive portion 1004c may be substantially symmetrical around the second conductive portion 1004b.

According to an embodiment, a frame 1005 of the electronic device 101 may include a first conductive portion 1005a (e.g., the first conductive portion 410), a second conductive portion 1005b (e.g., the second conductive portion 420), and a third conductive portion 1005c (e.g., the third conductive portion 430). Along a periphery of the frame 1005, at least one region of the conductive portion may be formed between non-conductive portions. For example, the first conductive portion 1005a may be disposed between a non-conductive portion 1005ab-1 and a non-conductive portion 1005ab-2. The first conductive portion 1005c may be disposed between a non-conductive portion 1005bc-1 and a non-conductive portion 1005bc-2. In addition, for example, at least one region of the second conductive portion 1005b may be disposed between the non-conductive portion 1005ab-1 and the non-conductive portion 1005bc-1. At least another region of the second conductive portion 1005b may be disposed between the non-conductive portion 1005ab-2 and the non-conductive portion 1005bc-2.

The frame 1005 of the electronic device 101 may form at least a portion of a side of the electronic device 101. According to an embodiment, the first conductive portion 1005a, the second conductive portion 1005b, and the third conductive portion 1005c may be disposed along a periphery region of the frame 1005. As an example, each of the first conductive portion 1005a and the third conductive portion 1005b may have a ' 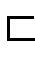 ' shape. The second conductive portion 1005b may be formed across a center region of the side. As an example, the second conductive portion 1005b may have an '□' shape. Furthermore, the first conductive portion 1005a and the third conductive portion 1005c may be substantially symmetrical around the second conductive portion 1005b.

According to an embodiment, in the frame 1000 to the frame 1005, other conductive portions may be symmetrically disposed around one conductive portion among a plurality of conductive portions forming each frame. Due to the symmetrical design, radiation performance may be maintained. For example, even if the electronic device 101 changes a radiator of a feeding antenna, it may be easy to secure performance in the same frequency band.

Meanwhile, other embodiments of the present disclosure are not limited to the symmetrical arrangement illustrated in FIG. 10A. Even if other conductive portions are not necessarily symmetrically disposed based on a conductive portion (e.g., the second conductive portion 1000b, the second conductive portion 1001b, the second conductive portion 1002b, the second conductive portion 1003b, the second conductive portion 1004b, and the second conductive portion 1005b) disposed in a center region of a side of the electronic device 101, the conductive portions may be used for capacitance sensing or feed switching according to an embodiment of the present disclosure.

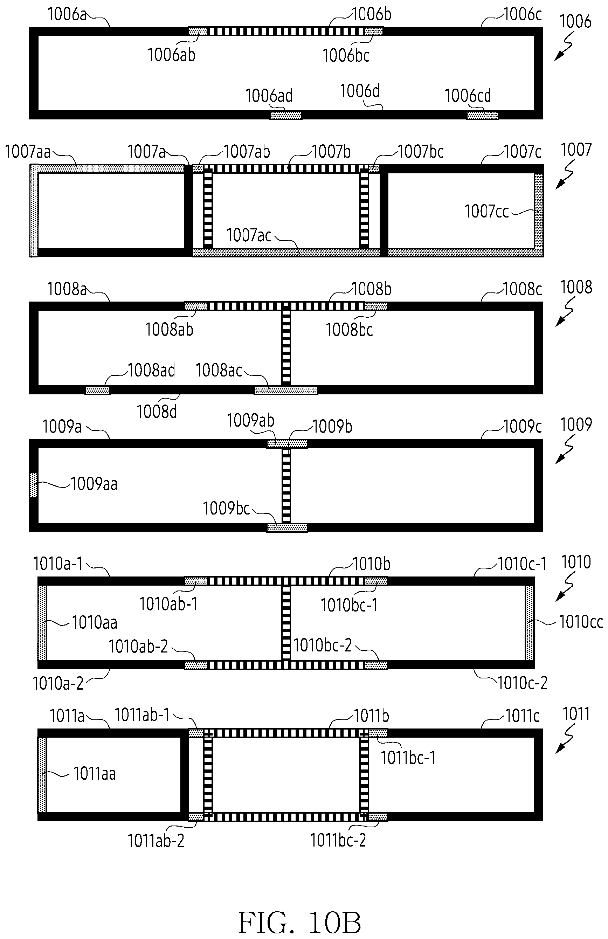

Referring to FIG. 10B, the electronic device 101 according to an embodiment may include a first conductive portion and a third conductive portion that are not symmetrical with respect to the second conductive portion. The second conductive portions of frames 1006 to 1011 (i.e., a delimiter frame positioned in a center region) to be described later may respectively correspond to the second conductive portions 1000b, 1001b, 1002b, 1003b, 1004b, and 1005b of the frames 1000 to 1005.

According to an embodiment, a frame 1006 of the electronic device 101 may include a first conductive portion 1006a (e.g., the first conductive portion 410), a second conductive portion 1006b (e.g., the second conductive portion 420), a third conductive portion 1006c, and a fourth conductive portion 1006d. The first conductive portion 1006a may be disposed between a non-conductive portion 1006ab and a non-conductive portion 1006ad. The second conductive portion 1006b may be disposed between the non-conductive portion 1006ab and a non-conductive portion 1006bc. Unlike the third conductive portion 1000c of the frame 1000, the third conductive portion 1006c and the fourth conductive portion 1006d may be formed by an additional non-conductive portion. The third conductive portion 1006c may be disposed between the non-conductive portion 1006bc and a non-conductive portion 1006cd. The fourth conductive portion 1006d may be disposed between a non-conductive portion 1006ad and the non-conductive portion 1006cd.

Although not illustrated in FIG. 10B, the electronic device 101 may support various frequency bands through control of a switch electrically connecting the third conductive portion 1006c and the fourth conductive portion 1006d. When the third conductive portion 1006c and the fourth conductive portion 1006d are electrically connected to each other, the electronic device 101 may use the third conductive portion 1006c and the fourth conductive portion 1006d as one antenna radiator. According to an embodiment, the electronic device 101 may connect the second conductive portion 1006b, the third conductive portion 1006c, and the fourth conductive portion 1006d to a feeding portion (e.g., the first wireless communication circuit 471) through feed switching, based on detecting a user's grip in a region adjacent to the first conductive portion 1006a.

According to an embodiment, a frame 1007 of the electronic device 101 may include a first conductive portion 1007a (e.g., the first conductive portion 410), a second conductive portion 1007b (e.g., the second conductive portion 420), and a third conductive portion 1007c (e.g., the third conductive portion 430). The first conductive portion 1007a and the third conductive portion 1007c may be asymmetrical based on the second conductive portion 1007b. A non-conductive portion forming at least a portion of a side may be disposed within the side. The conductive portions may be formed to be spaced apart from each other in the side, due to the non-conductive portions forming at least a portion of the side. For example, the first conductive portion 1007a may have an 'L' shape in which a region is opened. For example, the third conductive portion 1007c may have an 'L' shape in which a region is opened. The second conductive portion 1007b may be formed across a center region of the side. As an example, the second conductive portion 1007b may have a ' 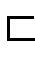 ' shape. Non-conductive portions may be formed in regions other than the conductive portions of the frame 1007. A non-conductive portion 1007aa, a non-conductive portion 1007ac, a non-conductive portion 1007bc, a non-conductive portion 1007cc, and a non-conductive portion 1007ac may be formed along a periphery of the frame 1007. Additionally, a non-conductive portion forming at least a portion of the side may be disposed within the side, in addition to a periphery of the side of the frame 1007.

According to an embodiment, a frame 1008 of the electronic device 101 may include a first conductive portion 1008a, a second conductive portion 1008b (e.g., the second conductive portion 420), a third conductive portion 1008c (e.g., the third conductive portion 430), and a fourth conductive portion 1008d. Non-conductive portions may be formed in regions other than the conductive portions of the frame 1008. A non-conductive portion 1008ab, a non-conductive portion 1008bc, a non-conductive portion 1008dc, and a non-conductive portion 1008ad may be formed along a periphery of the frame 1008. The second conductive portion 1008b may be formed across a center region of the side. As an example, the second conductive portion 1008b may have a ' 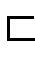 ' shape. Although not exemplified in FIG. 10B, a non-conductive portion forming at least a portion of a side may be disposed within the side, in addition to a periphery of the side of the frame 1008.

Unlike the first conductive portion 1002a of the frame 1002, the first conductive portion 1008a and the fourth conductive portion 1008d may be formed by an additional non-conductive portion. The non-conductive portion may be formed at a lower region of the side of the frame 1008. Although not illustrated in FIG. 10B, the electronic device 101 may support various frequency bands through control of a switch electrically connecting the first conductive portion 1008a and the fourth conductive portion 1008d.

According to an embodiment, a frame 1009 of the electronic device 101 may include a first conductive portion 1009a, a second conductive portion 1009b (e.g., the second conductive portion 420), a third conductive portion 1009c (e.g., the third conductive portion 430), and a fourth conductive portion 1009d. Non-conductive portions may be formed in regions other than the conductive portions of the frame 1009. A non-conductive portion 1009ab, a non-conductive portion 1009a, and a non-conductive portion 1009bc may be formed along a periphery of the frame 1009. Unlike the first conductive portion 1002a of the frame 1002, the first conductive portion 1009a and the fourth conductive portion 1009d may be formed by an additional non-conductive portion. The non-conductive portion may be formed in a side region of the side of the frame 1009.

According to an embodiment, a frame 1010 of the electronic device 101 may include a first conductive portion 1010a-1, a second conductive portion 1010b (e.g., the second conductive portion 420), a third conductive portion 1010c-1, a fourth conductive portion 1010a-2, and a fifth conductive portion 1010c-2. Non-conductive portions may be formed in regions other than the conductive portions of the frame 1010. A non-conductive portion 1010aa, a non-conductive portion 1010ab-1, a non-conductive portion 1010bc-1, a non-conductive portion 1010bb, a non-conductive portion 1010bc-2, and a non-conductive portion 1010ab-2 may be formed along a periphery of the frame 1010.

Unlike the first conductive portion 1004a of the frame 1004, the frame 1010 may include a first conductive portion 1010a-1 and a fourth conductive portion 1010a-2, which are additionally divided through a non-conductive portion. According to an embodiment, the first conductive portion 1010a-1 and the fourth conductive portion 1010a-2 may be used as one antenna radiator through an electrical connection between the first conductive portion 1010a-1 and the fourth conductive portion 1010a-2. When the first conductive portion 1010a-1 and the fourth conductive portion 1010a-2 are electrically connected to each other, the descriptions of the first conductive portion 410 of FIGS. 4A to 7 may be referenced for the first conductive portion 1010a-1 and the fourth conductive portion 1010a-2. In addition, according to an embodiment, the third conductive portion 1010c-1 and the fifth conductive portion 1010c-2 may be used as one antenna radiator through an electrical connection between the third conductive portion 1010c-1 and the fifth conductive portion 1010c-2. When the third conductive portion 1010c-1 and the fifth conductive portion 1010c-2 are electrically connected to each other, the descriptions of the third conductive portion 430 of FIGS. 4A to 7 may be referenced for the third conductive portion 1010c-1 and the fifth conductive portion 1010c-2.

According to an embodiment, a frame 1011 of the electronic device 101 may include a first conductive portion 1011a (e.g., the first conductive portion 410), a second conductive portion 1011b (e.g., the second conductive portion 420), and a third conductive portion 1011c (e.g., the third conductive portion 430). Non-conductive portions may be formed in regions other than the conductive portions of the frame 1110. A non-conductive portion 1110aa, a non-conductive portion 1110ab-1, a non-conductive portion 1110bc-1, a non-conductive portion 1110bc-2, and a non-conductive portion 1110ab-2 may be formed along a periphery of the frame 1110. The first conductive portion 1011a and the third conductive portion 1011c may be asymmetrical based on the second conductive portion 1011b.

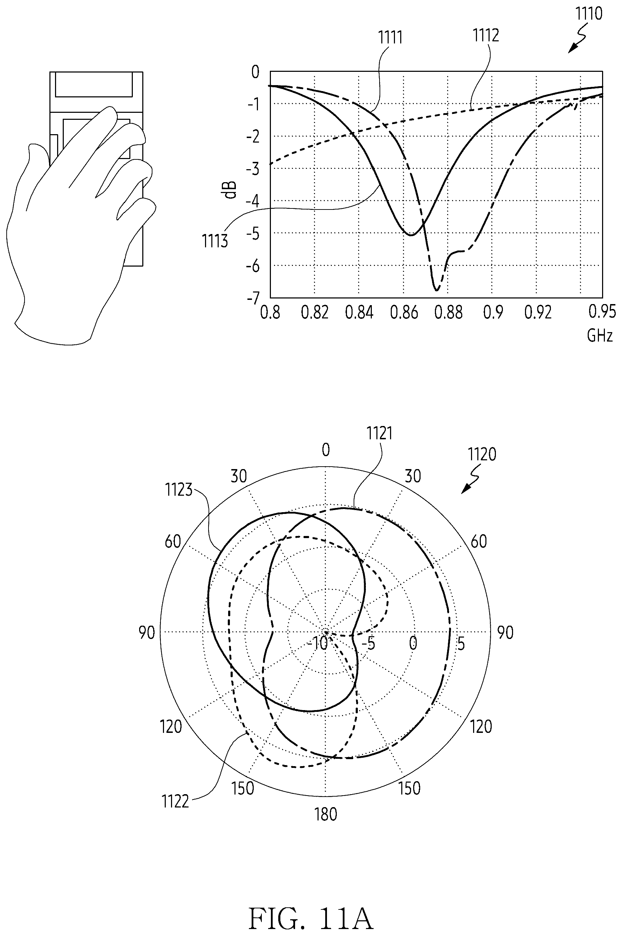

FIG. 11A illustrates an example of antenna performance in a BH environment according to an embodiment. An electronic device (e.g., the electronic device 101) may perform communication through at least one of a plurality of conductive portions formed in a frame (e.g., a lower frame). For example, the plurality of conductive portions may include a first conductive portion 410, a second conductive portion 420, and a third conductive portion 430.

Referring to FIG. 11A, a graph 1110 indicates S-parameters (e.g., reflection coefficient) for each frequency. In the graph 1110, a horizontal axis indicates a frequency (unit: GHz), and a vertical axis indicates a reflection coefficient. A line 1111 of the graph 1110 indicates a reflection coefficient for each frequency when an RF signal is fed to the third conductive portion 430 in a free state. A line 1112 of the graph 1110 indicates a reflection coefficient for each frequency when an RF signal is fed to the third conductive portion 430 in the BH environment. A line 1113 of the graph 1110 indicates a reflection coefficient for each frequency when an RF signal is fed to the first conductive portion 410 in the BH environment.

A directional graph 1120 indicates a radiation pattern when using the plurality of conductive portions. A radiation pattern 1121 indicates a radiation pattern when an RF signal is fed to the third conductive portion 430 in the free state. A radiation pattern 1122 indicates a radiation pattern when an RF signal is fed to the third conductive portion 430 in the BH environment. A radiation pattern 1123 indicates a radiation pattern when an RF signal is fed to the first conductive portion 410 in the BH environment.

Comparing the line 1112 and the line 1113 of the graph 1110, it may be identified that S-parameter performance is improved through a change of a feeding path in a condition in which a radiation region is covered. In addition, although not illustrated in the graph 1110, a resonance frequency at the line 1112 may be about 0.65 MHz. However, it may be identified that a resonant frequency (e.g., about 0.86 MHz) at the line 1113 becomes closer to a resonant frequency of the free state, for example, a resonant frequency (e.g., about 0.88 MHz) at the line 1111. Deterioration and change in radiation patterns by dielectric (e.g., hand) may be improved through a change in a radiator of an antenna.

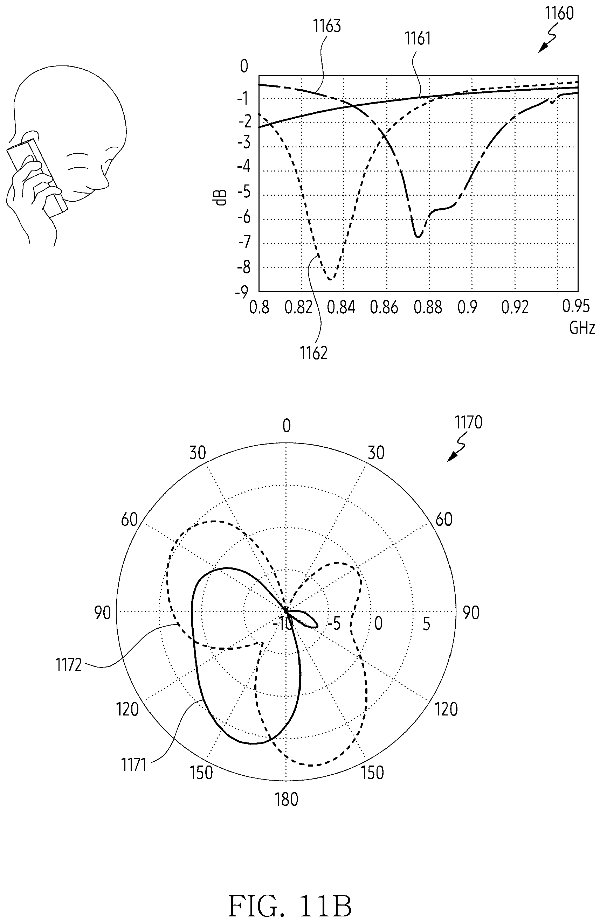

FIG. 11B illustrates an example of antenna performance in the BHH environment according to an embodiment. An electronic device (e.g., the electronic device 101) may perform communication through at least one of a plurality of conductive portions formed in a frame (e.g., the lower frame). The plurality of conductive portions may include a first conductive portion 410, a second conductive portion 420, and a third conductive portion 430.

Referring to FIG. 11B, a graph 1160 indicates S-parameters (e.g., reflection coefficient) for each frequency. In the graph 1160, a horizontal axis indicates a frequency (unit: GHz), and a vertical axis indicates a reflection coefficient. A line 1161 of the graph 1160 indicates a reflection coefficient for each frequency when an RF signal is fed to the third conductive portion 430 in the BH environment. A line 1162 of the graph 1160 indicates a reflection coefficient for each frequency when an RF signal is fed to the first conductive portion 410 in the BH environment. A line 1163 of the graph 1160 indicates a reflection coefficient for each frequency when an RF signal is fed to the third conductive portion 430 in the free state.

A directional graph 1170 indicates a radiation pattern when using the plurality of conductive portions. A radiation pattern 1171 indicates a radiation pattern when an RF signal is fed to the third conductive portion 430 in the BH environment. A radiation pattern 1172 indicates a radiation pattern when an RF signal is fed to the first conductive portion 410 in the BH environment.

Comparing the line 1161 and the line 1162 of the graph 1160, it may be identified that S-parameter performance is improved through feed switching in a grip condition in which the radiation region is covered. In addition, although not illustrated in the graph 1160, like FIG. 11A, it may be identified that a resonant frequency at the line 1161 becomes closer to a resonant frequency of the free state, for example, a resonant frequency (e.g., about 0.88 MHz) at the line 1163. Deterioration and change in radiation patterns by dielectric (e.g., hand or head) may be improved through reconfigured conductive portions of the frame. In addition, through the directional graph 1170, it may be identified that a directivity in the opposite direction of the human body is improved. Through feed switching according to embodiments, not only the radiation performance may be improved, but also the specific absorption rate (SAR) performance may be improved.

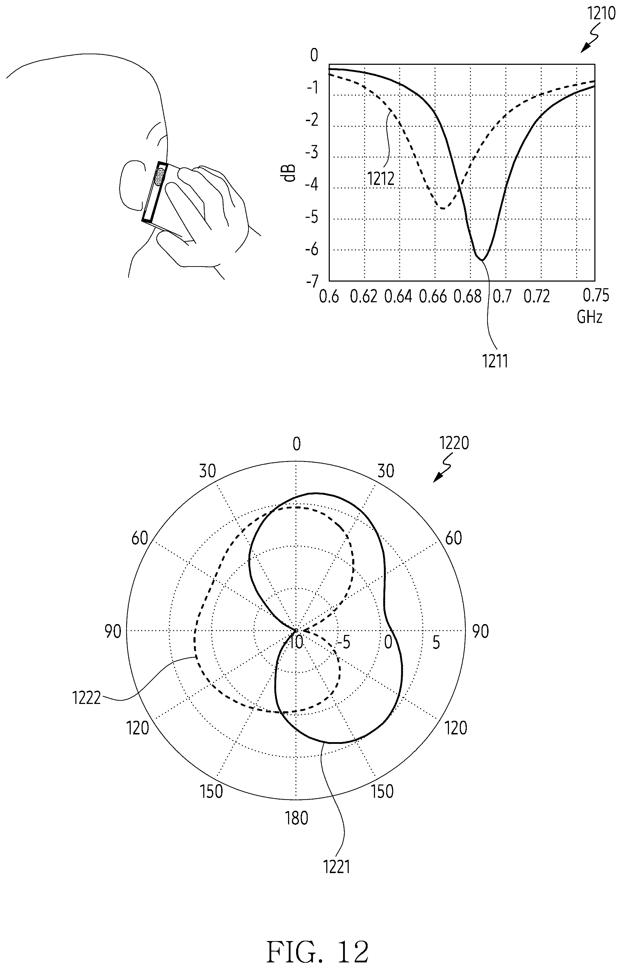

FIG. 12 illustrates an example of performance of an antenna using a plurality of conductive portions in an upper frame of an electronic device 101 according to an embodiment.

Referring to FIG. 12, an electronic device (e.g., the electronic device 101) may communicate through at least one of a plurality of conductive portions formed in the upper frame. For example, the plurality of conductive portions may include a first conductive portion 410, a second conductive portion 420, and a third conductive portion 430.

A graph 1210 indicates S-parameters (e.g., reflection coefficient) for each frequency. In the graph 1210, a horizontal axis indicates a frequency (unit: GHz), and a vertical axis indicates a reflection coefficient. A line 1211 of the graph 1210 indicates a reflection coefficient for each frequency when an RF signal is fed to the third conductive portion 430. A line 1212 of the graph 1210 indicates a reflection coefficient for each frequency when an RF signal is fed to the first conductive portion 410. In addition, a directional graph 1220 indicates a radiation pattern when a plurality of conductive portions disposed in the upper frame are used in the BHH environment. A radiation pattern 1221 indicates a radiation pattern when an RF signal is fed to the third conductive portion 430. A radiation pattern 1222 indicates a radiation pattern when an RF signal is fed to the first conductive portion 410.

Referring to the graph 1210 and the directivity graph 1220, it may be identified that the radiation performance varies according to feed switching (e.g., from the third conductive portion 430 to the first conductive portion 410, and from the first conductive portion 410 to the third conductive portion 430). Therefore, even if conductive portions for feed switching according to the embodiments of the present disclosure are implemented in the upper frame, the radiation efficiency may be improved.

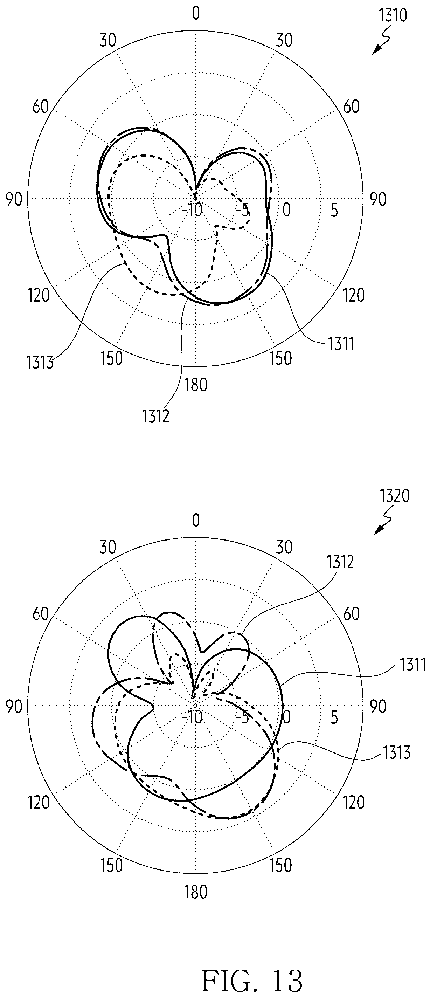

FIG. 13 illustrates examples of a radiation pattern of feed switching according to an embodiment.

Referring to FIG. 13, a directional graph 1310 illustrates a radiation pattern in a free state. An electronic device (e.g., the electronic device 101) may perform communication through at least one of a plurality of conductive portions formed in a frame. The plurality of conductive portions may include a first conductive portion 410, a second conductive portion 420, and a third conductive portion 430. A first radiation pattern 1313 refers to a radiation pattern when an RF signal of a first wireless communication circuit 471 is provided only to the first conductive portion 410 in the BHH environment. The second conductive portion 420 may be used for grounding. A second radiation pattern 1312 refers to a radiation pattern when an RF signal of the first wireless communication circuit 471 is provided only to the third conductive portion 430 in the free state. The second conductive portion 420 may be used for grounding. A third radiation pattern 1311 refers to a radiation pattern when an RF signal of the first wireless communication circuit 471 is provided to the second conductive portion 420 and the third conductive portion 430.

A directional graph 1320 illustrates a radiation pattern in the BHH environment. A first radiation pattern 1311 may be a radiation pattern in the third state 1065 of FIG. 8C. A second radiation pattern 1312 may be a radiation pattern in the second state 1063 of FIG. 8C. The third radiation pattern 1313 may be a radiation pattern in the first state 1061 of FIG. 8C.

Referring to the directional graph 1310 and the directional graph 1320, it may be identified that in a free state, when a feeding path is changed, an influence by the second conductive portion 420 is insufficient. Since the first radiation pattern 1311 and the second radiation pattern 1312 are not significantly different, there is little practical benefit to additionally emit a signal through a delimiter frame. Meanwhile, it may be identified that in the BHH environment, when the feeding path is changed, an influence by the delimiter frame is significant. Since directivities of the first radiation pattern 1311 and the second radiation pattern 1312 are different from each other, practical benefit for additionally emitting a signal through the delimiter frame is high. The electronic device 101 may change the feeding path to obtain additional directivity (e.g., about 90° direction). Through the changed directivity, a ratio of radiation signal absorbed by the human body may be reduced. Accordingly, through the change of the feeding path using the conductive portions of the frame according to embodiments, a specific absorption rate (SAR) may be reduced.

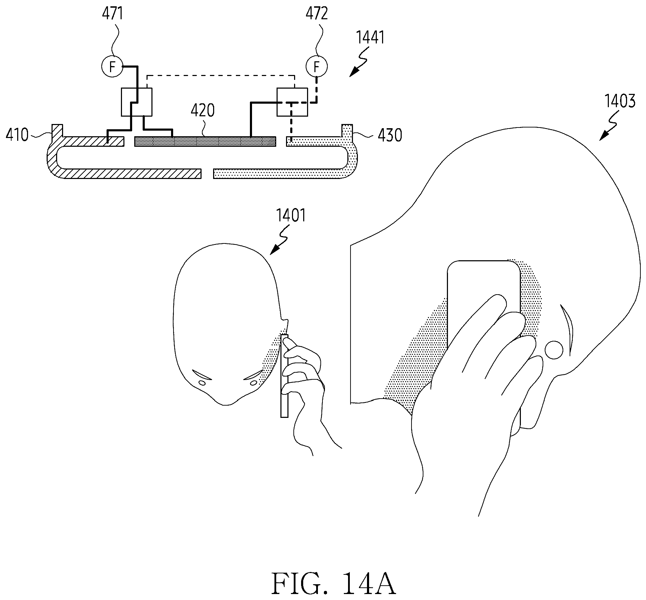

FIGS. 14A to 14C illustrate examples of specific absorption rate (SAR) performance in the BHH environment.

Referring to FIG. 14A, in a first state 1441, the electronic device 101 may provide a first RF signal of a first wireless communication circuit 471 only to a first conductive portion 410. The first conductive portion 410 may operate as an antenna radiator of the electronic device 101. A radiation diagram 1401 is a diagram showing a size of SAR value in the first state 1441 in the upper region of a user. A radiation diagram 1403 is a diagram showing a size of SAR value in the first state 1441, in the user's right side region. As an example, in the first state 1441, the SAR value may be about 0.01 (unit: W/kg).

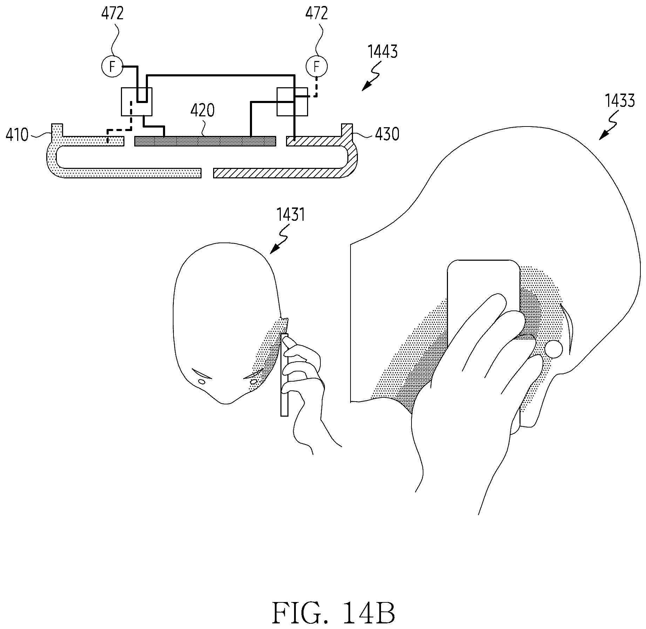

Referring to FIG. 14B, in a second state 1443, the electronic device 101 may provide a second RF signal of the first wireless communication circuit 471 to the third conductive portion 430 only. In the second state 1443, the second conductive portion 420 may be used for ground. The third conductive portion 430 may function as the antenna of the electronic device 101. A radiation diagram 1431 is a diagram showing a size of SAR value in the second state 1443, in the upper region of the user. A radiation diagram 1433 is a diagram showing a size of SAR value in the second state 1443 in the user's right side region. As an example, in the second state 1443, the SAR value may be about 0.09 (unit: W/kg).

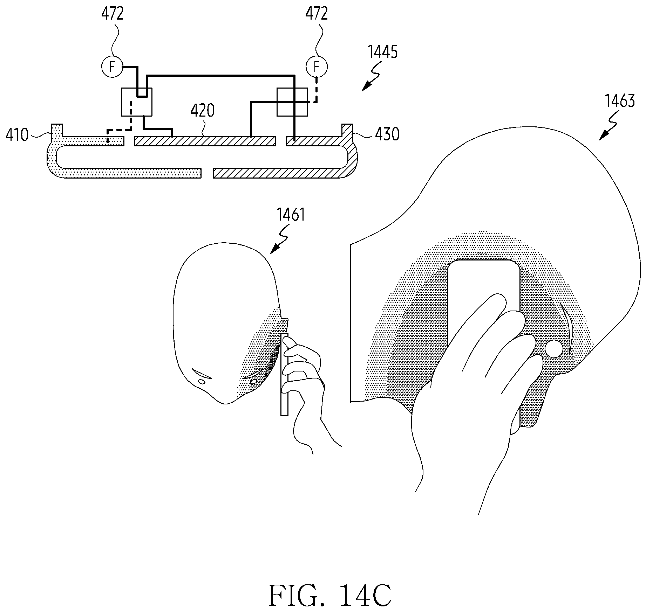

Referring to FIG. 14C, in a third state 1445, the electronic device 101 may provide a third RF signal of the first wireless communication circuit 471 to the second conductive portion 420 and the third conductive portion 430. The second conductive portion 420 and the third conductive portion 430 may operate as an antenna radiator of the electronic device 101. A radiation diagram 1461 is a diagram showing a size of SAR value in the third state 1445, in the upper region of the user. A radiation diagram 1463 is a diagram showing a size of SAR value in the third state 1445, in the user's right side region. As an example, in the third state 1445, the SAR value may be about 0.08 (unit: W/kg).

As illustrated in FIGS. 14A to 14C, a size of the SAR may be reduced by changing the feeding point. In the BHH environment, the electronic device 101 may detect a situation in which the electronic device 101 is adjacent to the user's left or right head. For example, the electronic device 101 may detect a situation in which the electronic device 101 is adjacent to the left side region or the right side region of the user's head, based on at least one of conditions, such as whether a face is close to the electronic device 101, whether a microphone or face touches the electronic device 101, and whether a grip of the electronic device 101 is detected. The SAR characteristic may be improved through feed switching, such as changing the radiation pattern in a case in which only the first conductive portion 410 is used, a case in which only the third conductive portion 430 is used, and a case in which all of the second conductive portion 420 and the third conductive portion 430 are used. The SAR characteristic may be improved by switching the feed point to a case where the SAR value is lowered among the cases.

In various embodiments, an electronic device 101 may comprise at least one grip sensor 440, 611, 612, or 640, at least one processor 120, a first housing, a second housing coupled to the first housing so as to be movable along a first direction in which the first housing is drawn out or along a second direction opposite to the first direction, and a first conductive portion 410, a second conductive portion 420, and a third conductive portion 430 disposed on a side of the second housing facing the second direction. The first conductive portion 410 may be disposed in a first side region of the side, the third conductive portion 430 may be disposed in a second side region opposite the first side region, and the second conductive portion 420 may be disposed between the first conductive portion 410 and the third conductive portion 430. A first segmentation portion may be formed between the first conductive portion 410 and the second conductive portion 420, and a second segmentation portion may be formed between the third conductive portion 430 and the second conductive portion 420. The at least one processor 120 may be configured to detect a grip of the electronic device 101 through the at least one grip sensor 440, 611, 612, or 640. The at least one processor 120 may be configured to, based on identifying that the grip is associated with the first side region of the electronic device 101, communicate with an external electronic device through the third conductive portion 430 and the second conductive portion 420.

According to an embodiment, the at least one processor 120 may be further configured, based on identifying that the grip of the electronic device 101 is associated with the second side region of the electronic device 101, to communicate with the external electronic device through the first conductive portion 410 and the second conductive portion 420.

According to an embodiment, the second conductive portion 420 may be disposed to across a central area of the side. When viewed in the second direction toward the side, the first conductive portion 410 and the third conductive portion 430 may be disposed symmetrically with respect to the second conductive portion 420.

According to an embodiment, in a case that the grip is detected in the first side region, the at least one processor 120 may be configured to connect the first conductive portion 410 to a ground line. In a case that the grip is detected in the second side region, the at least one processor 120 may be configured to connect the third conductive portion 430 to the ground line.

According to an embodiment, the at least one processor 120 may be configured to, based on identifying a grip in the first side region through the at least one grip sensor 440, 611, 612, or 640, connect the first conductive portion 410 and the second conductive portion 420 to the ground line. The at least one processor 120 may be configured to communicate with an external electronic device through the third conductive portion 430 based on the ground line.

According to an embodiment, the at least one processor 120 may be configured to, based on identifying a grip in the second side region through the at least one grip sensor 440, 611, 612, or 640, connect the third conductive portion 430 and the second conductive portion 420 to the ground line. The at least one processor 120 may be configured to communicate with an external electronic device through the third conductive portion 430 based on the ground line.

According to an embodiment, a frame length of the first conductive portion 410 may be substantially the same as a frame length of the third conductive portion 430.

According to an embodiment, the at least one grip sensor 440, 611, 612, or 640 may be electrically connected to the second conductive portion 420.

According to an embodiment, the at least one grip sensor 440, 611, 612, or 640 may include a first grip sensor 611 and a second grip sensor 612. The first grip sensor 611 may be electrically connected to the first conductive portion 410. The second grip sensor 612 may be electrically connected to the third conductive portion 430.

According to an embodiment, the grip sensor 640 may include a first port and a second port. The first port may be electrically connected to the first conductive portion 410. The second port may be electrically connected to the third conductive portion 430.

According to an embodiment, the electronic device 101 may comprise a tuning circuit and a switching circuit connected to the tuning circuit. The tuning circuit may be connected to the first conductive portion 410 and the second conductive portion 420. The switching circuit may be connected to the third conductive portion 430 and the second conductive portion 420.

According to an embodiment, the electronic device 101 may comprise a first wireless communication circuit 471 for the first conductive portion 410, and a second wireless communication circuit 472 for the third conductive portion 430. The first wireless communication circuit 471 may be connected to the tuning circuit. The second wireless communication circuit 472 may be connected to the switching circuit.

According to an embodiment, the at least one processor 120 may be configured, before the grip of the electronic device 101 is detected, to communicate with an external electronic device through the first conductive portion 410 and the second conductive portion 420.

According to an embodiment, the at least one processor 120 may be configured, before the grip of the electronic device 101 is detected, to communicate with an external electronic device through the first conductive portion 410.

According to an embodiment, the at least one processor 120 may be configured to communicate with an external electronic device at a first communication frequency through the first conductive portion 410. The first communication frequency may be different from a second communication frequency that uses the first conductive portion 410 and the second conductive portion 420.

According to an embodiment, for detecting the grip, the at least one processor 120 may be configured to identify that the grip is associated with the first side region of the electronic device 101 in a case that a change in capacitance obtained through the at least one grip sensor 440, 611, 612, or 640 is greater than or equal to a first threshold and is less than a second threshold. For detecting the grip, the at least one processor 120 may be configured to identify that the grip is associated with the second side region of the electronic device 101 in a case that the change in capacitance is greater than or equal to the second threshold.

According to an embodiment, for detecting the grip, the at least one processor 120 may be configured to obtain a total capacitance through the at least one grip sensor 440, 611, 612, or 640. For detecting the grip, the at least one processor 120 may be configured to obtain the change in capacitance based on a reference capacitance of the at least one grip sensor 440, 611, 612, or 640 and the total capacitance.

According to an embodiment, a third segmentation portion may be formed between the first conductive portion 410 and the third conductive portion 430. A non-conductive structure for the first segmentation portion, the second segmentation portion, and the third segmentation portion may be disposed on the side.

According to an embodiment, each of the first conductive portion 410 and the third conductive portion 430 may have a 'U' shape or a ' 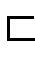 ' shape.

In various embodiments, an electronic device 101 may comprise at least one grip sensor 440, 611, 612, or 640, at least one processor 120, a first housing, a second housing coupled to the first housing so as to be movable along a first direction in which the first housing is drawn out or along a second direction opposite to the first direction, and a first conductive portion 410, a second conductive portion 420, and a third conductive portion 430 disposed on a side of the first housing facing the first direction. The first conductive portion 410 may be disposed in a first side region of the side, the third conductive portion 430 may be disposed in a second side region opposite the first side region, and the second conductive portion 420 may be disposed between the first conductive portion 410 and the third conductive portion 430. A first segmentation portion may be formed between the first conductive portion 410 and the second conductive portion 420, and a second segmentation portion may be formed between the third conductive portion 430 and the second conductive portion 420. The at least one processor 120 may be configured to detect a grip of the electronic device 101 through the at least one grip sensor 440, 611, 612, or 640. The at least one processor 120 may be configured to, based on identifying that the grip is associated with the first side region of the electronic device 101, communicate with an external electronic device through the third conductive portion 430 and the second conductive portion 420.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

Meanwhile, specific embodiments have been described in the detailed description of the present disclosure, and of course, various modifications are possible without departing from the scope of the present disclosure.

## Claims

1. An electronic device (101) comprising:
at least one grip sensor (440, 611, 612, 640);
at least one processor (120);
a first housing;
a second housing coupled to the first housing so as to be movable along a first direction in which the first housing is drawn out or along a second direction opposite to the first direction; and
a first conductive portion (410), a second conductive portion (420), and a third conductive portion (430) disposed on a side of the second housing facing the second direction,
wherein the first conductive portion (410) is disposed in a first side region of the side, the third conductive portion (430) is disposed in a second side region opposite the first side region, and the second conductive portion (420) is disposed between the first conductive portion (410) and the third conductive portion (430),
wherein a first segmentation portion is formed between the first conductive portion (410) and the second conductive portion (420), and a second segmentation portion is formed between the third conductive portion (430) and the second conductive portion (420),
wherein the at least one processor (120) is configured to:
detect a grip of the electronic device (101) through the at least one grip sensor (440, 611, 612, 640), and
based on identifying that the grip is associated with the first side region of the electronic device (101), communicate with an external electronic device through the third conductive portion (430) and the second conductive portion (420).

2. The electronic device (101) of claim 1, wherein the at least one processor (120) is further configured, based on identifying that the grip of the electronic device (101) is associated with the second side region of the electronic device (101), to communicate with the external electronic device through the first conductive portion (410) and the second conductive portion (420).

3. The electronic device (101) of claims 1 to 2, wherein the second conductive portion (420) is disposed to across a central area of the side, and, when viewed in the second direction toward the side, the first conductive portion (410) and the third conductive portion (430) are arranged symmetrically with respect to the second conductive portion (420).

4. The electronic device (101) of claims 1 to 3,
wherein, in a case that the grip is detected in the first side region, the at least one processor (120) is configured to connect the first conductive portion (410) to a ground line, and
wherein, in a case that the grip is detected in the second side region, the at least one processor (120) is configured to connect the third conductive portion (430) to the ground line.

5. The electronic device (101) of claims 1 to 4, wherein the at least one processor (120) is further configured to:
based on identifying a grip in the first side region through the at least one grip sensor (440, 611, 612, 640), connect the first conductive portion (410) and the second conductive portion (420) to the ground line, and
communicate with an external electronic device through the third conductive portion (430) based on the ground line.

6. The electronic device (101) of claims 1 to 5, wherein the at least one processor (120) is further configured to:
based on identifying a grip in the second side region through the at least one grip sensor (440, 611, 612, 640), connect the third conductive portion (430) and the second conductive portion (420) to the ground line, and
communicate with an external electronic device through the third conductive portion (430) based on the ground line.

7. The electronic device (101) of claims 1 to 6, wherein the at least one grip sensor (440, 611, 612, 640) includes a first grip sensor (611) and a second grip sensor (612),
wherein the first grip sensor (611) is electrically connected to the first conductive portion (410), and
wherein the second grip sensor (612) is electrically connected to the third conductive portion (430).

8. The electronic device (101) of claims 1 to 7, wherein the grip sensor (640) includes a first port and a second port,
wherein the first port is electrically connected to the first conductive portion (410), and
wherein the second port is electrically connected to the third conductive portion (430).

9. The electronic device (101) of claims 1 to 8, further comprising:
a tuning circuit; and
a switching circuit connected to the tuning circuit,
wherein the tuning circuit is connected to the first conductive portion (410) and the second conductive portion (420), and
wherein the switching circuit is connected to the third conductive portion (430) and the second conductive portion (420).

10. The electronic device (101) of claims 1 to 9, further comprising:
a first wireless communication circuit (471) for the first conductive portion (410), and
a second wireless communication circuit (472) for the third conductive portion (430),
wherein the first wireless communication circuit (471) is connected to the tuning circuit and the second wireless communication circuit (472) is connected to the switching circuit.

11. The electronic device (101) of claims 1 to 10, wherein the at least one processor (120) is further configured, before the grip of the electronic device (101) is detected, to communicate with an external electronic device through the first conductive portion (410).

12. The electronic device (101) of claims 1 to 11,
wherein the at least one processor (120) is further configured to communicate with an external electronic device at a first communication frequency through the first conductive portion (410), and
wherein the first communication frequency is different from a second communication frequency that uses the first conductive portion (410) and the second conductive portion (420).

13. The electronic device (101) of claims 1 to 12, wherein, for detecting the grip, the at least one processor (120) is configured to:
identify that the grip is associated with the first side region of the electronic device (101) in a case that a change in capacitance obtained through the at least one grip sensor (440, 611, 612, 640) is greater than or equal to a first threshold and is less than a second threshold, and
identify that the grip is associated with the second side region of the electronic device (101) in a case that the change in capacitance is greater than or equal to the second threshold.

14. The electronic device (101) of claims 1 to 13, wherein, for detecting the grip, the at least one processor (120) is configured to:
obtain a total capacitance through the at least one grip sensor (440, 611, 612, 640), and
obtain the change in capacitance based on a reference capacitance of the at least one grip sensor (440, 611, 612, 640) and the total capacitance.

15. An electronic device (101) comprising:
at least one grip sensor (440, 611, 612, 640);
at least one processor (120);
a first housing;
a second housing coupled to the first housing so as to be movable along a first direction in which the first housing is drawn out or along a second direction opposite to the first direction; and
a first conductive portion (410), a second conductive portion (420), and a third conductive portion (430) disposed on a side of the first housing facing the first direction,
wherein the first conductive portion (410) is disposed in a first side region of the side, the third conductive portion (430) is disposed in a second side region opposite the first side region, and the second conductive portion (420) is disposed between the first conductive portion (410) and the third conductive portion (430),
wherein a first segmentation portion is formed between the first conductive portion (410) and the second conductive portion (420), and a second segmentation portion is formed between the third conductive portion (430) and the second conductive portion (420),
wherein the at least one processor (120) is configured to:
detect a grip of the electronic device (101) through the at least one grip sensor (440, 611, 612, 640), and
based on identifying that the grip is associated with the first side region of the electronic device (101), communicate with an external electronic device through the third conductive portion (430) and the second conductive portion (420).
